# EUROPEAN PATENT APPLICATION

(11) **EP 4 216 402 A1**
(43) Date of publication of application: **26.07.2023**
(21) Application number: 21869035.2
(22) Date of filing: 26.07.2021
(51) Int. Cl.: H02K 5/14, H02K 13/00, H02K 11/026

(54) **ELECTRIC MOTOR**

(30) Priority: 18.09.2020 JP 2020156958
(71) Applicant: Panasonic Intellectual Property Management Co., Ltd., Osaka-shi, Osaka 540-6207 (JP)
(72) Inventor: MIZOE, Hajime, Osaka-shi, Osaka 540-6207 (JP); MIZUKAMI, Hirofumi, Osaka-shi, Osaka 540-6207 (JP)
(74) Representative: SSM Sandmair
(86) International application number: PCT/JP2021/027517
(87) International publication number: WO 2022/059348

(57) **Abstract**

An electric motor includes a brush holder, a first terminal having a first exposed part exposed from an outer surface side of the brush holder, a second terminal having a second exposed part exposed from the outer surface side of the brush holder, and a capacitor having a first lead joined to the first exposed part and a second lead joined to the second exposed part. The brush holder has a recess formed in the outer surface side of the brush holder, the recess includes a first recess where the first exposed part is positioned, a second recess where the second exposed part is positioned, and a third recess positioned between the first recess and the second recess and integrally formed with the first recess and the second recess, and a body of the capacitor is housed in the third recess.

## Description

### TECHNICAL FIELD

The present disclosure relates to an electric motor.

### BACKGROUND ART

Electric motors have been also widely used in electric fields mounted on vehicles such as automobiles. For example, in a two-wheeled or four-wheeled vehicle, an electric motor has been used to drive a cooling fan that cools a radiator and a battery.

A brushed electric motor using a brush and a brushless electric motor not using a brush have been known as the electric motor. The brushed electric motor includes a stator, a rotor that rotates by a magnetic force of the stator, a commutator attached to a rotating shaft of the rotor, and a brush in sliding contact with the commutator. Power is supplied to the brush from an external power source via a pair of power source terminals (for example, a positive terminal and a negative terminal connected to a DC power source) attached to the brush holder or the like.

For the electric motor, it may be necessary to reduce noise generated from the electric motor. For example, the electric motor used for the cooling fan of the radiator in a vehicle is required to reduce noise of a predetermined frequency.

In this case, in the brushed electric motor, noise is reduced by reducing a spark between the brush and the commutator which is a generation source of noise or shielding noise by metal due to the user of a bracket or the like made of metal.

In addition, a technology for reducing noise by connecting a capacitor in parallel between the pair of power source terminals has also been proposed (See, for example, PTL 1). In this case, the capacitor is housed inside the electric motor, for example, by being mounted on a circuit board disposed in a housing of the electric motor, or is disposed between a pair of power source lines (harnesses) connected to a pair of power source terminals.

In recent years, there is a need for reduction in thickness of the electric motor. In particular, the electric motor used for the cooling fan of the radiator in the vehicle is required to be extremely thin as a whole.

Thus, even though it is attempted to dispose the capacitor for noise reduction, there is no space for disposing the capacitor inside the electric motor, and it is difficult to house the capacitor inside the electric motor. In addition, even though the capacitor can be housed inside the electric motor, since a disposition space is small, heat dissipation of the capacitor deteriorates. As a result, a temperature of the capacitor increases, a function of a short-circuit failure mode of the capacitor decreases, or a capacitance decreases, and a noise reduction effect by the capacitor deteriorates. In particular, when the electric motor is a flat type and an outer diameter of the electric motor is less than or equal to 120 mm, a space in the electric motor becomes narrow, and there is no space for housing the capacitor in the electric motor, or the heat dissipation of the capacitor significantly deteriorates even though the capacitor can be housed in the electric motor.

As a method for disposing the capacitor between the pair of power source lines, for example, there is a method for connecting a conducting part of the capacitor and the power source line by caulking by using a film capacitor as the capacitor. However, in such a method, it is necessary to process the capacitor to connect a lead that is the conducting part of the capacitor to a conductive wire of the power source line after removing the coating of the power source line, and thus, mass productivity of the electric motor deteriorates.

### Citation List

### Patent Literature

PTL 1: Unexamined Japanese Patent Publication No. 2018-198475

### SUMMARY OF THE INVENTION

The present disclosure has been made to solve the above problems. An object of the present disclosure is to provide an electric motor that is easily thinned, is excellent in heat dissipation of a capacitor, and is excellent in mass productivity even though a capacitor for noise reduction is used.

In order to achieve the above object, an aspect of an electric motor according to the present disclosure includes a commutator, a first brush and a second brush that are in contact with the commutator, a brush holder that holds the first brush and the second brush, a first terminal that has a first exposed part exposed from an outer surface side of the brush holder, and is electrically connected to the first brush, a second terminal that has a second exposed part exposed from the outer surface side of the brush holder, and is electrically connected to the second brush, a first electric wire that is joined to the first exposed part of the first terminal, a second electric wire that is joined to the second exposed part of the second terminal, and a capacitor that has a first lead joined to the first exposed part of the first terminal and a second lead joined to the second exposed part of the second terminal. The brush holder has a recess formed in the outer surface side of the brush holder, the recess includes a first recess where the first exposed part of the first terminal is positioned, a second recess where the second exposed part of the second terminal is positioned, and a third recess that is positioned between the first recess and the second recess and is integrally formed with the first recess and the second recess, and a body of the capacitor is housed in the third recess.

According to the present disclosure, it is possible to realize an electric motor that is easily thinned, is excellent in heat dissipation of the capacitor, and is excellent in mass productivity even though the capacitor for noise reduction is used.

### BRIEF DESCRIPTION OF THE DRAWINGS

Fig. 1 is an external perspective view of an electric motor according to an exemplary embodiment as viewed from above.
Fig. 2 is an external perspective view of the electric motor according to the exemplary embodiment as viewed from below.
Fig. 3 is a cross-sectional view of the electric motor according to the exemplary embodiment.
Fig. 4 is a rear view of the electric motor according to the exemplary embodiment.
Fig. 5 is a perspective view illustrating an internal structure of a brush holder in the electric motor according to the exemplary embodiment.
Fig. 6 is a plan view illustrating a brush holder in which a first brush and a second brush are housed in the electric motor according to the exemplary embodiment.
Fig. 7 is a plan view of the electric motor according to the exemplary embodiment when a sealant is omitted as viewed from a back side.
Fig. 8 is a perspective view of the electric motor according to the exemplary embodiment when the sealant is omitted as viewed from the back side.
Fig. 9 is a perspective view of a first terminal used in the electric motor according to the exemplary embodiment.
Fig. 10 is a cross-sectional view illustrating a positional relationship between a first electric wire disposed in a first exposed part of a first terminal and a first lead of a capacitor in the electric motor according to the exemplary embodiment.
Fig. 11A is an enlarged plan view of a recess of the brush holder and a part around the recess in a step when the first terminal and a second terminal are attached to the brush holder.
Fig. 11B is an enlarged perspective view of the recess of the brush holder and the part around the recess in the step of Fig. 11A.
Fig. 12A is an enlarged plan view of the recess of the brush holder and the part around the recess in a step when the capacitor is disposed in the recess of the brush holder.
Fig. 12B is an enlarged perspective view of the recess of the brush holder and the part around the recess in the step of Fig. 12A.
Fig. 13A is an enlarged plan view of the recess of the brush holder and the part around the recess in a step when the first electric wire and a second electric wire are disposed in the recess of the brush holder.
Fig. 13B is an enlarged perspective view of the recess of the brush holder and the part around the recess in the step of Fig. 13A.
Fig. 14A is an enlarged plan view of the recess of the brush holder and the part around the recess in a step when the first electric wire, the first lead of the capacitor, and the first terminal are joined by caulking and the second electric wire, a second lead of the capacitor, and the second terminal are joined by caulking.
Fig. 14B is an enlarged perspective view of the recess of the brush holder and the part around the recess in the step of Fig. 14A.
Fig. 15A is an enlarged plan view of the recess of the brush holder and the part around the recess in a step when the recess of the brush holder is filled with the sealant.
Fig. 15B is an enlarged perspective view of the recess of the brush holder and the part around the recess in the step of Fig. 15A.
Fig. 16 is a cross-sectional view illustrating a configuration of a first exposed part of a first terminal according to a modified example.
Fig. 17A is an enlarged perspective view illustrating a configuration of a recess in an electric motor according to the modified example.
Fig. 17B is a cross-sectional view of a main part corresponding to a cross section taken along line 17B-17B in Fig. 17A.
Fig. 18 is a plan view illustrating a first modified example of the recess in the brush holder.
Fig. 19 is a plan view illustrating a second modified example of the recess in the brush holder.
Fig. 20 is a plan view illustrating a third modified example of the recess in the brush holder.
Fig. 21 is a plan view illustrating a fourth modified example of the recess in the brush holder.
Fig. 22 is a plan view illustrating a fifth modified example of the recess in the brush holder.
Fig. 23 is a plan view illustrating a sixth modified example of the recess in the brush holder.
Fig. 24 is a plan view illustrating a seventh modified example of the recess in the brush holder.
Fig. 25A is a plan view illustrating an eighth modified example of the recess in the brush holder.
Fig. 25B is a plan view illustrating a ninth modified example of the recess in the brush holder.
Fig. 25C is a plan view illustrating a tenth modified example of the recess in the brush holder.
Fig. 25D is a plan view illustrating an eleventh modified example of the recess in the brush holder.
Fig. 25E is a plan view illustrating a twelfth modified example of the recess in the brush holder.
Fig. 25F is a plan view illustrating a thirteenth modified example of the recess in the brush holder.

### DESCRIPTION OF EMBODIMENT

An exemplary embodiment of the present disclosure will be described below with reference to the drawings. Note that the exemplary embodiment to be described below illustrates one specific example of the present disclosure. Therefore, numerical values, shapes, materials, configuration elements, disposition positions and connection modes of the configuration elements, and the like described in the following exemplary embodiments are merely examples, and are not intended to limit the present disclosure. Thus, among the configuration elements in the following exemplary embodiment, configuration elements that are not described in independent claims indicating the highest concept of the present disclosure are described as optional configuration elements.

Note that each of the drawings is a schematic view, and is not necessarily strictly illustrated. In addition, in each of the drawings, substantially the same components are denoted by the same reference marks, and redundant description will be omitted or simplified. In addition, in the present description, the terms "above" and "below" do not necessarily indicate an upward direction (vertically above) and a downward direction (vertically below) in terms of absolute spatial recognition.

### (Exemplary embodiment)

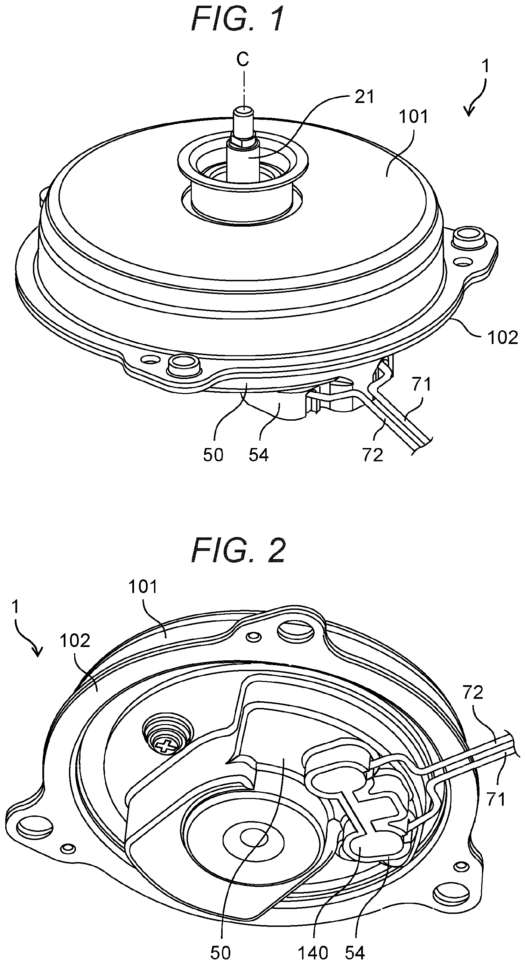

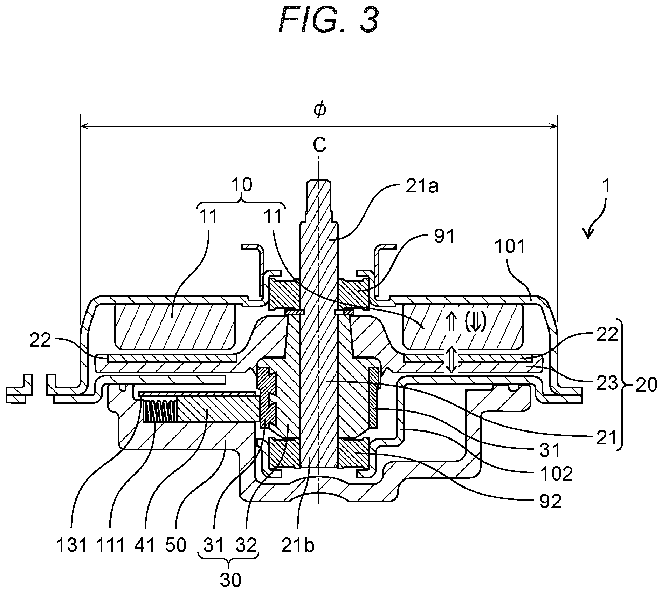

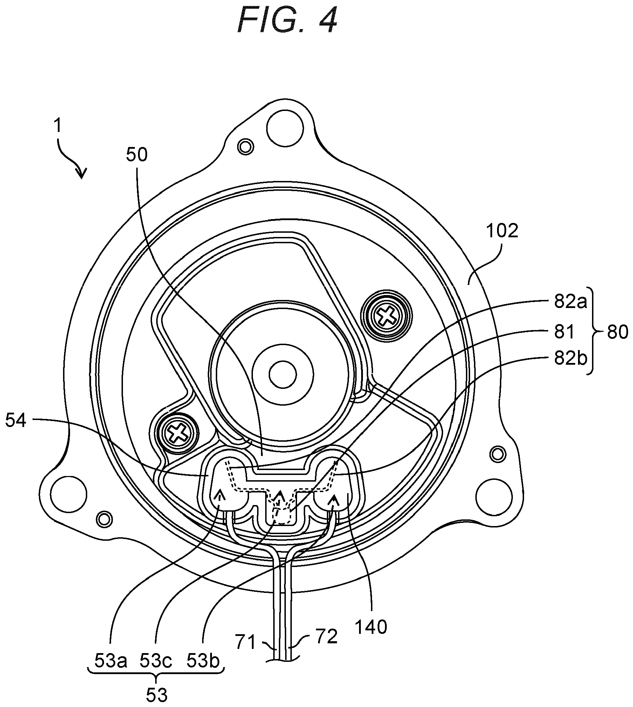

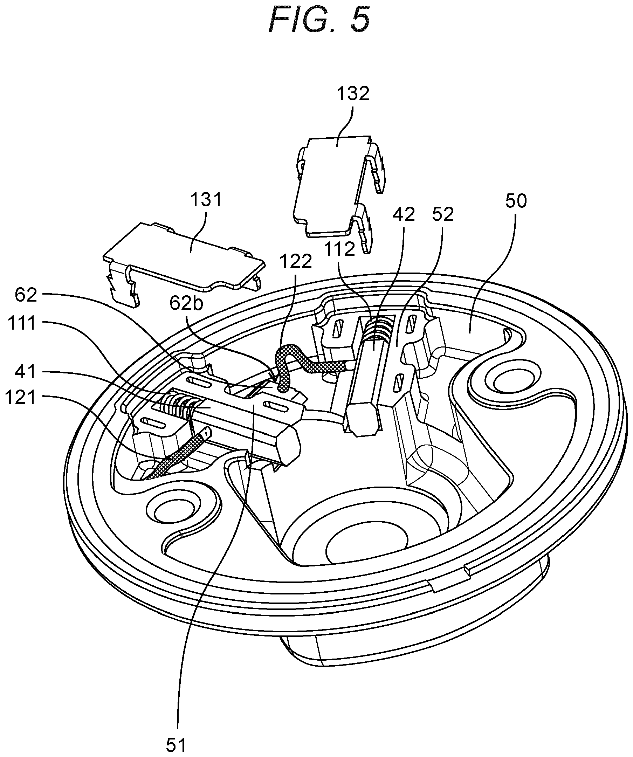

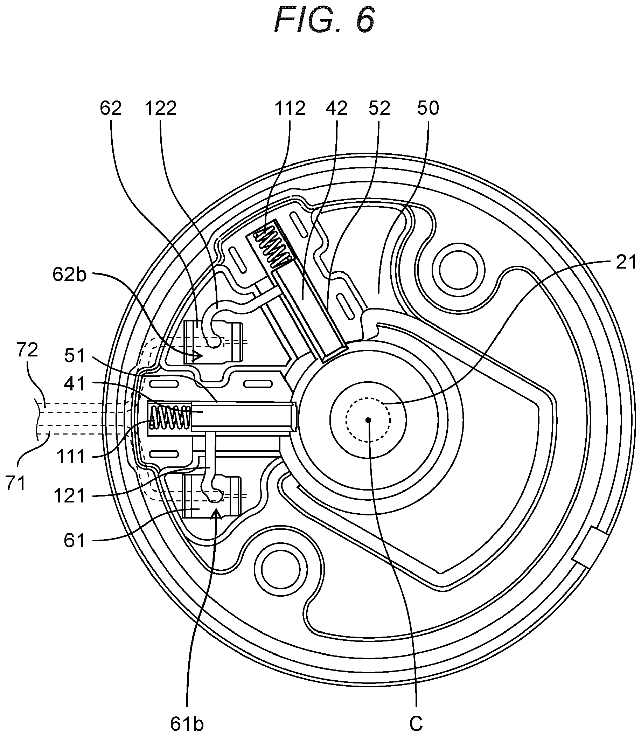

First, an overall configuration of electric motor 1 according to an exemplary embodiment will be described with reference to Figs. 1 to 6. Fig. 1 is an external perspective view of electric motor 1 according to the exemplary embodiment as viewed from above. Fig. 2 is an external perspective view of electric motor 1 as viewed from below. Fig. 3 is a cross-sectional view of electric motor 1, and Fig. 4 is a rear view of electric motor 1. Fig. 5 is a perspective view illustrating an internal structure of brush holder 50 in electric motor 1. Fig. 6 is a plan view illustrating brush holder 50 in which first brush 41 and second brush 42 are housed in electric motor 1. Note that, in Fig. 3, only a part appearing in a cross section of electric motor 1 is illustrated. Figs. 5 and 6 illustrate brush holder 50 in a state where first cover plate 131 and second cover plate 132 are removed.

As illustrated in Fig. 3, electric motor 1 includes stator 10 and rotor 20 that rotates by a magnetic force of stator 10. Electric motor 1 is a brushed electric motor. As illustrated in Fig. 3, electric motor 1 includes commutator 30 attached to rotating shaft 21 of rotor 20. As illustrated in Figs. 5 and 6, electric motor 1 includes first brush 41 and second brush 42 that are in contact with commutator 30.

As illustrated in Figs. 1 to 6, electric motor 1 further includes brush holder 50 that holds first brush 41 and second brush 42, first terminal 61 that is electrically connected to first brush 41, second terminal 62 that is electrically connected to second brush 42, first electric wire 71 that is connected to first terminal 61, second electric wire 72 that is connected to second terminal 62, and capacitor 80 that is connected to first terminal 61 and second terminal 62. Electric motor 1 further includes first bearing 91, second bearing 92, first bracket 101, and second bracket 102.

Electric motor 1 is a type of direct current electric motor (DC motor) driven by a direct current. In electric motor 1, magnets 11 are used as stator 10. In electric motor 1, an armature having armature windings 22 is used as rotor 20. Electric motor 1 is a flat type (flat type) brushed coreless motor (flat motor) mounted on a vehicle such as a two-wheeled vehicle or a four-wheeled vehicle. Therefore, stator 10 and rotor 20 do not have a core (iron core), and electric motor 1 is thin and light as a whole. Specifically, electric motor 1 is a small motor used for a cooling fan of a radiator in a vehicle. Outer diameter (diameter) ϕ of electric motor 1 is less than or equal to 120 mm. As an example, outer diameter ϕ of electric motor 1 is 70 mm. Note that electric motor 1 is driven by an input voltage of DC 12 V.

Hereinafter, each component of electric motor 1 will be described in detail.

As illustrated in Fig. 3, stator 10 is disposed with a minute air gap between the stator and rotor 20. Stator 10 generates a magnetic force acting on rotor 20. Stator 10 is configured to generate a magnetic flux on an air gap surface with rotor 20, and constitutes a magnetic circuit together with rotor 20 that is an armature. Specifically, stator 10 has a substantially doughnut shape as a whole, and is configured such that N poles and S poles are alternately and evenly present on the air gap surface with rotor 20 along a circumferential direction of rotating shaft 21. Stator 10 is a field magnet that generates a magnetic flux for generating a torque, and includes a plurality of magnets 11 (magnets). Magnet 11 is, for example, a permanent magnet having an S pole and an N pole.

The plurality of magnets 11 constituting stator 10 are disposed such that N poles and S poles are alternately and evenly present in the circumferential direction. A direction of a main magnetic flux generated by stator 10 (magnet 11) is a direction along a direction in which rotating shaft 21 extends. The direction of the main magnetic flux is generated in a direction corresponding to the magnetic pole of magnet 11. Stator 10 is fixed to first bracket 101.

As illustrated in Fig. 3, rotor 20 has rotating shaft 21, and rotates about shaft center C of rotating shaft 21 as a center. Rotor 20 generates a magnetic force acting on stator 10. A direction of a main magnetic flux generated by rotor 20 is the direction along the direction in which rotating shaft 21 extends. The direction of the main magnetic flux is generated in a direction corresponding to a direction of a current flowing through armature windings 22.

Rotor 20 faces stator 10 in a direction of shaft center C of rotating shaft 21.

Rotating shaft 21 is a shaft having shaft center C, and is an elongated rod-shaped member such as a metal rod. That is, shaft center C of rotating shaft 21 serves as a center of rotation of rotor 20. A longitudinal direction of rotating shaft 21, that is, the direction in which rotating shaft 21 extends (extending direction) is also referred to as the direction of shaft center C (axial direction).

First end 21a that is one end of rotating shaft 21 is supported by first bearing 91. On the other hand, second end 21b of the other end of rotating shaft 21 is supported by second bearing 92. As an example, first bearing 91 and second bearing 92 are bearings such as ball bearings.

First end 21a of rotating shaft 21 is an output-side end (output shaft), and protrudes from first bracket 101 and first bearing 91. A load such as a rotary fan is attached to first end 21a. Note that second end 21b of rotating shaft 21 is an end on an opposite output side (opposite output shaft), and does not protrude from second bracket 102 and second bearing 92.

First bearing 91 is supported by first bracket 101. Specifically, first bearing 91 is fixed to a recess provided in first bracket 101. In addition, second bearing 92 is held by second bracket 102. Specifically, second bearing 92 is fixed to a recess provided in second bracket 102.

First bracket 101 and second bracket 102 are each made of a metallic material, for example. For example, first bracket 101 and second bracket 102 are made of an iron-based material such as a cold rolled steel plate (SPC material) or metal such as aluminum. Note that first bracket 101 and second bracket 102 constitute a housing, and stator 10 and rotor 20 are disposed in the housing.

In the present exemplary embodiment, first bracket 101 is an outer frame member of electric motor 1, and is formed in a bottomed cylindrical shape having a bottom and a cylindrical sidewall. Magnet 11 constituting stator 10 is fixed to the bottom of first bracket 101. In addition, armature windings 22 of rotor 20 are surrounded by the sidewall of first bracket 101. Note that the materials of first bracket 101 and second bracket 102 are not limited to the metallic material, and may be a resin material. However, from the viewpoint of suppressing noise generated from electric motor 1, first bracket 101 and second bracket 102 may be made of a metallic material.

As illustrated in Fig. 3, rotor 20 includes rotating shaft 21, a plurality of armature windings 22, and molded resin 23 covering the plurality of armature windings 22.

The plurality of armature windings 22 include electric wires. A current flows, and thus, the plurality of armature windings 22 are wound to generate a magnetic force acting on stator 10. A direction of a main magnetic flux generated by each armature winding 22 is the direction of shaft center C of rotating shaft 21. That is, magnet 11 of stator 10 and armature winding 22 of rotor 20 are aligned in the direction of shaft center C of rotating shaft 21.

Each armature winding 22 is made of an insulating coating wire having a core wire made of metal such as copper or aluminum and an insulating film coating the core wire. Each of the plurality of armature windings 22 is a thin winding coil having a coil layer in which a conductive wire is wound in a planar shape. Specifically, each of the plurality of armature windings 22 includes, for example, one or a plurality of coil layers in which an insulating coating wire is wound in a substantially fan shape in plan view. The plurality of armature windings 22 having the above-described configuration is disposed to surround rotating shaft 21 when viewed from the direction of shaft center C of rotating shaft 21.

Each of the plurality of armature windings 22 is electrically connected to commutator 30. Specifically, each of the plurality of armature windings 22 is electrically connected to any one of a plurality of commutator segments 31 of commutator 30.

The plurality of armature windings 22 are integrally molded together with molded resin 23 by being covered with molded resin 23. Molded resin 23 is made of an insulating resin material such as a phenol resin or an unsaturated polyester (BMC).

As illustrated in Fig. 3, commutator 30 is attached to rotating shaft 21. Therefore, commutator 30 rotates together with rotating shaft 21 as rotor 20 rotates. In the present exemplary embodiment, commutator 30 is attached to second end 21b side of rotating shaft 21. Commutator 30 attached to rotating shaft 21 may be a part of rotor 20.

Commutator 30 includes a plurality of commutator segments 31 (commutator segments) provided along a rotation direction of rotating shaft 21. Specifically, the plurality of commutator segments 31 are annularly arranged along the rotation direction of rotating shaft 21 to surround rotating shaft 21. Note that a shape of each commutator segment 31 is an elongated member extending in the longitudinal direction of rotating shaft 21.

Each of the plurality of commutator segments 31 is a conductive terminal made of a metallic such as copper, and is electrically connected to armature winding 22 of rotor 20. The plurality of commutator segments 31 are disposed to be insulated and separated from each other, but are electrically connected by armature windings 22 of rotor 20. For example, two adjacent commutator segments 31 are electrically connected by armature winding 22.

As an example, commutator 30 is a molded commutator, and has a configuration in which the plurality of commutator segments 31 are molded by molded resin 32. In this case, the plurality of commutator segments 31 are embedded in molded resin 32 such that surfaces thereof are exposed. Molded resin 32 is a commutator body and is a substantially cylindrical member having a through-hole into which rotating shaft 21 is inserted. Molded resin 32 is, for example, a resin molded body made of an insulating resin material such as a thermosetting resin.

As illustrated in Fig. 3, first brush 41 is in contact with commutator 30. Although not illustrated, second brush 42 is also in contact with commutator 30. Specifically, first brush 41 and second brush 42 are in contact with commutator segments 31 of commutator 30. Since commutator 30 rotates by the rotation of rotating shaft 21, first brush 41 and second brush 42 are continuously in contact with all commutator segments 31 sequentially.

As illustrated in Figs. 5 and 6, first brush 41 and second brush 42 are disposed in brush holder 50. Specifically, first brush 41 and second brush 42 are disposed in brush holder 50 such that longitudinal directions of first brush and second brush are a direction orthogonal to shaft center C of rotating shaft 21 (that is, a radial direction of rotation of rotating shaft 21).

In the present exemplary embodiment, first brush 41 and second brush 42 are disposed such that an angle between the longitudinal direction of first brush 41 and the longitudinal direction of second brush 42 is smaller than 180°. In other words, first brush 41 and second brush 42 are disposed in a positional relationship of an inverted "V"-shape in top view. Specifically, the angle between the longitudinal direction of first brush 41 and the longitudinal direction of second brush 42 is less than or equal to 90°, and is about 60° in the present exemplary embodiment. Note that the angle between the longitudinal direction of first brush 41 and the longitudinal direction of second brush 42 may be 180°. That is, first brush 41 and second brush 42 may be disposed symmetrically with respect to shaft center C of rotating shaft 21.

First brush 41 and second brush 42 are power source brushes (energizing brushes) that supply power to armature winding 22 by coming into contact with commutator segment 31. First brush 41 and second brush 42 are conductive conductors. As an example, each of first brush 41 and second brush 42 is an elongated substantially rectangularparallelepiped carbon brush made of carbon. First brush 41 and second brush 42 may be carbon brushes containing metal such as copper. As a result, a contact resistance between each of first brush 41 and second brush 42 and commutator segment 31 can be reduced. First brush 41 and second brush 42 can be produced, for example, by pulverizing a kneaded product obtained by kneading a graphite powder, a copper powder, a binder resin, and a hardener, compression-molding the pulverized product into a rectangularparallelepiped, and firing the resultant.

As illustrated in Figs. 5 and 6, brush holder 50 includes first brush spring 111 and second brush spring 112. First brush 41 receives a pressing force from first brush spring 111, and is attached to be constantly in contact with commutator segment 31 of commutator 30. That is, first brush 41 is pressed against commutator 30 by first brush spring 111. Similarly, second brush 42 receives a pressing force from second brush spring 112, and is attached to be constantly in contact with commutator segment 31 of commutator 30. That is, second brush 42 is pressed against commutator 30 by second brush spring 112.

First brush spring 111 and second brush spring 112 apply a pressing force (spring pressure) to first brush 41 and second brush 42 by a spring elastic force (spring restoring force) to bias first brush 41 and second brush 42 toward commutator 30. Each of first brush spring 111 and second brush spring 112 is a compression coil spring. First brush spring 111 and second brush spring 112 may be torsion springs or the like.

First brush spring 111 is disposed behind first brush 41 such that one end in an extending direction of first brush spring 111 is in contact with a rear end face of first brush 41. As a result, a front end of first brush 41 in the longitudinal direction is constantly in contact with commutator segment 31 by the pressing force of first brush spring 111. Similarly, second brush spring 112 is disposed behind second brush 42 such that one end in an extending direction of second brush spring 112 is in contact with a rear end face of second brush 42. As a result, a front end of second brush 42 in the longitudinal direction is constantly in contact with commutator segment 31 by the pressing force of second brush spring 112. As described above, as first brush 41 and second brush 42 are worn by friction with commutator segment 31, first brush 41 and second brush 42 move in a direction (radial direction) toward shaft center C of rotating shaft 21 by the pressing force from first brush spring 111 and second brush spring 112.

Power is supplied to first brush 41 and second brush 42 from an external power source disposed outside electric motor 1 via first terminal 61 and second terminal 62, respectively. The external power source is a power source present outside electric motor 1, and supplies a predetermined input voltage to electric motor 1. The external power source is a DC power source that supplies an input voltage of DC 12 V to electric motor 1.

First terminal 61 and second terminal 62 receive power energized to armature winding 22 of rotor 20 via first brush 41 and second brush 42, respectively. In the present exemplary embodiment, since the external power source is a DC power source, first terminal 61 and second terminal 62 receive a DC voltage as an input voltage from the DC power source. In this case, for example, first terminal 61 is a high-voltage side terminal (positive terminal), and second terminal 62 is a low-voltage side terminal (negative terminal). Although details will be described later, first terminal 61 and second terminal 62 are attached to brush holder 50. First electric wire 71 and second electric wire 72 are electrically connected to first terminal 61 and second terminal 62, respectively, and first terminal 61 and second terminal 62 receive power from the external power source via first electric wire 71 and second electric wire 72, respectively.

First electric wire 71 and second electric wire 72 are power source lines for supplying power to first terminal 61 and second terminal 62, respectively. For example, first electric wire 71 and second electric wire 72 are harnesses. In a case where first terminal 61 is a high-voltage side terminal and second terminal 62 is a low-voltage side terminal, first electric wire 71 connected to first terminal 61 is a high-voltage side power source line (positive-side wire). Second electric wire 72 connected to second terminal 62 is a low-voltage side power source line (negative-side wiring). Each of first electric wire 71 and second electric wire 72 is an insulating coating wire such as a vinyl wire, and includes a core wire made of a conductor such as copper and an insulating film coating the core wire.

As illustrated in Figs. 5 and 6, first brush 41 and first terminal 61 are connected by first pigtail line 121. Specifically, one end of first pigtail line 121 is joined to first brush 41. The other end of first pigtail line 121 is joined to first terminal 61. Similarly, second brush 42 and second terminal 62 are connected by second pigtail line 122. Specifically, one end of second pigtail line 122 is joined to second brush 42. The other end of second pigtail line 122 is joined to second terminal 62.

Power is supplied from the external power source to first terminal 61 and second terminal 62 by first electric wire 71 and second electric wire 72, and thus, a current is supplied to first brush 41 and second brush 42 via first pigtail line 121 connected to first terminal 61 and second pigtail line 122 connected to second terminal 62.

In electric motor 1 having the above-described configuration, the current supplied to first brush 41 and second brush 42 flows as an armature current (drive current) to armature winding 22 via commutator segment 31 of commutator 30. As a result, a magnetic flux is generated in rotor 20 (armature winding 22). The magnetic force generated by an interaction between the magnetic flux generated in rotor 20 and the magnetic flux generated from stator 10 becomes a torque for rotating rotor 20. At this time, a direction in which the current flows is switched depending on a positional relationship when commutator segment 31 of commutator 30 is in contact with first brush 41 and second brush 42. As described above, the direction in which the current flows is switched, and thus, a rotational force in a certain direction is generated by a repulsive force and an attractive force of the magnetic force generated between stator 10 and rotor 20. Accordingly, rotor 20 rotates about rotating shaft 21.

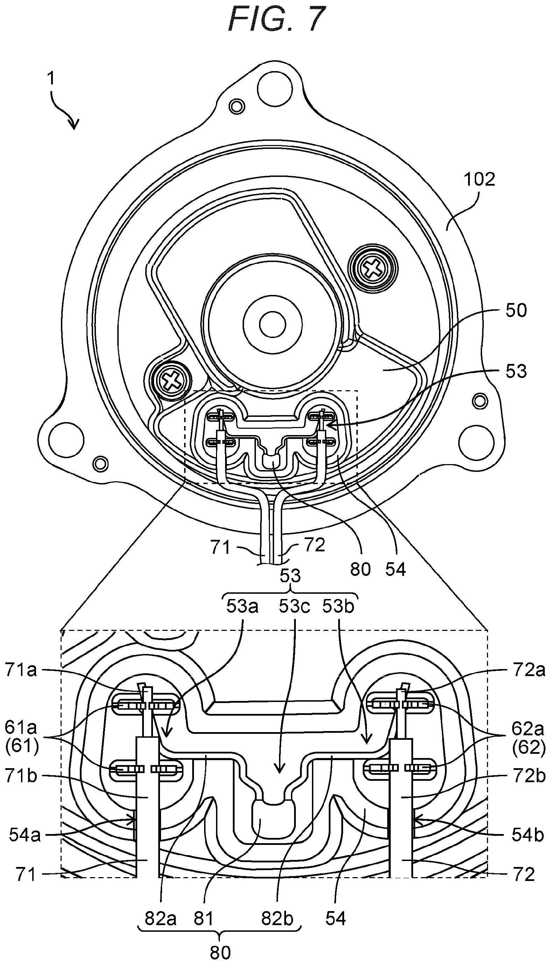

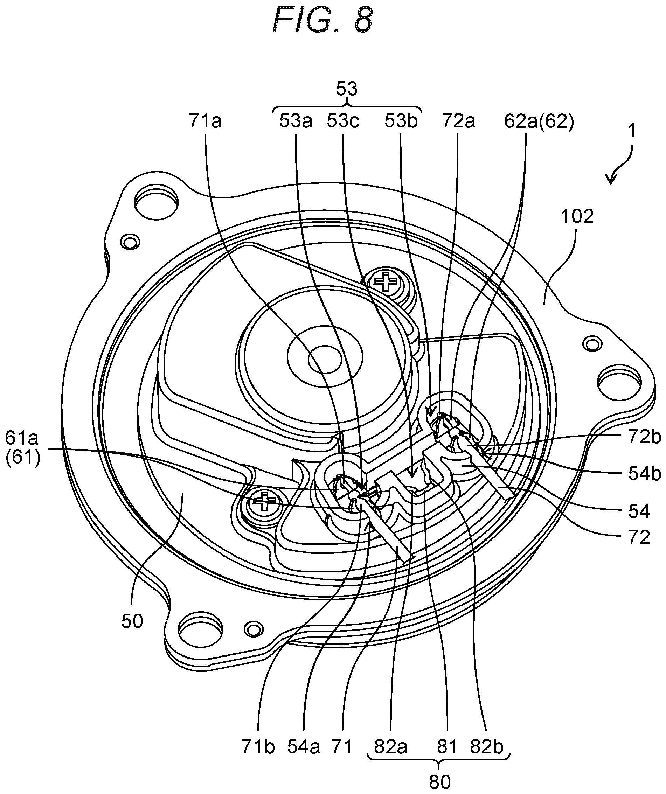

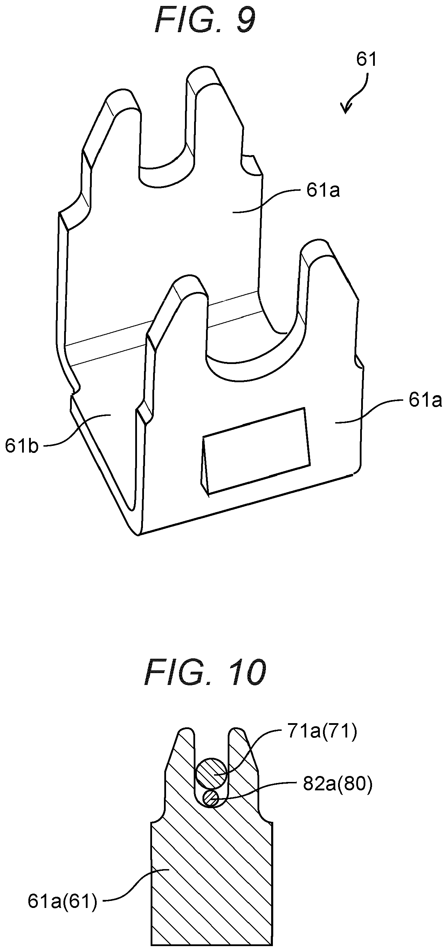

Next, as a characteristic structure of electric motor 1 according to the present exemplary embodiment, a detailed structure of brush holder 50 together with first terminal 61 and second terminal 62 will be described with reference to Figs. 3 to 6 and Figs. 7 to 9. Fig. 7 is a plan view of electric motor 1 according to the exemplary embodiment as viewed from a back side when sealant 140 is omitted. Fig. 8 is a perspective view of electric motor 1 as viewed from the back side. Fig. 9 is a perspective view of first terminal 61 used in electric motor 1.

Brush holder 50 is a holding member that holds first brush 41 and second brush 42. Brush holder 50 is made of, for example, an insulating resin material. In the present exemplary embodiment, brush holder 50 is a resin molded article formed by integral molding using a resin material. As illustrated in Fig. 3, in the present exemplary embodiment, brush holder 50 is an outer frame member constituting an outer frame of electric motor 1, and covers second bracket 102 from an outside.

As illustrated in Figs. 5 and 6, brush holder 50 includes first brush housing 51 in which first brush 41 is housed, and second brush housing 52 in which second brush 42 is housed. First brush housing 51 and second brush housing 52 are formed in a concave shape on an inner surface side of brush holder 50.

In the present exemplary embodiment, first brush housing 51 and second brush housing 52 are formed to be long in a direction orthogonal to shaft center C of rotating shaft 21 (that is, the radial direction of the rotation of rotating shaft 21) and to have a concave cross-sectional shape.

As illustrated in Figs. 3 and 5, first brush housing 51 in which first brush 41 is housed is covered with first cover plate 131. Similarly, second brush housing 52 in which second brush 42 is housed is covered with second cover plate 132. First cover plate 131 and second cover plate 132 are made of, for example, a metal sheet, and are disposed to cover first brush housing 51 and second brush housing 52, respectively.

Note that, as illustrated in Figs. 5 and 6, first brush spring 111 is housed in first brush housing 51 together with first brush 41. Similarly, second brush spring 112 is housed in second brush housing 52 together with second brush 42. Therefore, lengths of first brush housing 51 and second brush housing 52 in the longitudinal direction are longer than lengths of first brush 41 and second brush 42, respectively.

As described above, power is supplied to first brush 41 and second brush 42 via first terminal 61 and second terminal 62, respectively.

As illustrated in Figs. 7 and 8, first terminal 61 and second terminal 62 are attached to brush holder 50 to be partially exposed to an outer surface side of brush holder 50. Specifically, first terminal 61 has first exposed part 61a exposed from the outer surface side of brush holder 50. Second terminal 62 has second exposed part 62a exposed from the outer surface side of brush holder 50.

First terminal 61 and second terminal 62 are electrode terminals that receive power from the external power source via first electric wire 71 and second electric wire 72, respectively. First electric wire 71 is joined to first exposed part 61a of first terminal 61. Second electric wire 72 is joined to second exposed part 62a of second terminal 62.

As illustrated in Fig. 9, a pair of first exposed parts 61a of first terminal 61 are plate-shaped side plates, and are formed to stand from both ends of the plate-shaped bottom plate 61b. Therefore, first terminal 61 has a substantially U-shaped cross-sectional shape as a whole. A pair of protrusions is formed at a distal end of each of the pair of first exposed parts 61a. One of the pair of first exposed parts 61a has a width (plate width) wider than the other. Therefore, an interval between the pair of protrusions of first exposed part 61a having a wider width is narrower than an interval between the pair of protrusions of first exposed part 61a having the smaller width.

As illustrated in Figs. 5 and 6, bottom plate 61b of first terminal 61 is positioned on the inner surface side of brush holder 50 in a state where first terminal 61 is attached to brush holder 50. The pair of first exposed parts 61a of first terminal 61 are inserted through a pair of slit-shaped through-holes formed in brush holder 50 from the inside to the outside of brush holder 50, and thus, the pair of first exposed parts are exposed to the outer surface side of brush holder 50. At this time, the pair of first exposed parts 61a are pushed into a slit of brush holder 50. As a result, locking parts formed on side surfaces of the pair of first exposed parts 61a are locked to the inner surface of brush holder 50, and thus, first terminal 61 is fixed to brush holder 50.

Note that second terminal 62 has the same shape as first terminal 61, and includes bottom plate 62b of second terminal 62 and a pair of second exposed parts 62a. Second terminal 62 is fixed to brush holder 50 in the same manner as first terminal 61. First terminal 61 and second terminal 62 are made of a conductive material such as a metallic material.

As illustrated in Figs. 7 and 8, first electric wire 71 is joined to first exposed part 61a of first terminal 61. Specifically, first electric wire 71 is joined to first exposed part 61a of first terminal 61 by being caulked to a part of first exposed part 61a of first terminal 61.

First terminal 61 includes the pair of first exposed parts 61a. First part 71a (core wire exposed part) where the core wire is exposed on a distal end side of first electric wire 71 is caulked to one of the pair of first exposed parts 61a of first terminal 61. As a result, in first part 71a of first electric wire 71, first terminal 61 and first electric wire 71 are electrically connected and fixed to each other. Specifically, first part 71a of first electric wire 71 is disposed in a recess between a pair of protrusions at the distal end of first exposed part 61a (in the present exemplary embodiment, first exposed part 61a positioned on the inner side) having a narrower width out of the pair of first exposed parts 61a of first terminal 61. The pair of protrusions are joined to first terminal 61 by caulking.

In addition, second part 71b (core wire unexposed part) where the core wire of first electric wire 71 is not exposed is caulked to the other of the pair of first exposed parts 61a of first terminal 61. As a result, first terminal 61 and first electric wire 71 can be fixed also at second part 71b of first electric wire 71. That is, first terminal 61 and first electric wire 71 can be fixed to other than first part 71a of first electric wire 71. As a result, for example, even though first electric wire 71 is pulled after first electric wire 71 is fixed to first terminal 61, a stress can be absorbed by a part where first exposed part 61a and second part 71b are fixed, and is hardly transmitted to a joined portion between first exposed part 61a and first part 71a. Thus, it is possible to suppress disconnection of first terminal 61 and first electric wire 71 at first part 71a of first electric wire 71.

Second part 71b of first electric wire 71 is a part of first electric wire 71 in which the core wire is covered with an insulating film. Therefore, in second part 71b of first electric wire 71, first terminal 61 and first electric wire 71 are fixed to each other, but are not electrically connected.

In addition, in first electric wire 71, second part 71b in which the core wire is covered with an insulating film has a wire diameter larger than a wire diameter of first part 71a by an insulating film. Therefore, second part 71b of first electric wire 71 is disposed in the recess between the pair of protrusions at the distal end of first exposed part 61a (in the present exemplary embodiment, first exposed part 61a positioned on the outer side) having a wider width out of the pair of first exposed parts 61a of first terminal 61, and is joined to first terminal 61 by caulking the pair of protrusions.

Similarly for second terminal 62, second electric wire 72 is joined to second exposed part 62a of second terminal 62. Specifically, second electric wire 72 is joined to second exposed part 62a of second terminal 62 by being caulked to a part of second exposed part 62a of second terminal 62.

Second terminal 62 has the pair of second exposed parts 62a. First part 72a (core wire exposed part) where the core wire is exposed on a distal end side of second electric wire 72 is caulked to one of the pair of second exposed parts 62a of second terminal 62. As a result, at first part 72a of second electric wire 72, second terminal 62 and second electric wire 72 are electrically connected and fixed to each other. Specifically, first part 72a of second electric wire 72 is disposed in a recess between the pair of protrusions at a distal end of second exposed part 62a (in the present exemplary embodiment, second exposed part 62a positioned on the inner side) having a narrower width out of the pair of second exposed parts 62a of second terminal 62. The pair of protrusions are joined to second terminal 62 by caulking.

Second part 72b (core wire unexposed part) where the core wire of second electric wire 72 is not exposed is caulked to the other of the pair of second exposed parts 62a of second terminal 62. As a result, second terminal 62 and second electric wire 72 can be fixed also at second part 72b of second electric wire 72. That is, second terminal 62 and second electric wire 72 can be fixed to a part other than first part 72a of second electric wire 72. As a result, even though second electric wire 72 is pulled after second electric wire 72 is fixed to second terminal 62, for example, a stress can be absorbed by a part where second exposed part 62a and second part 72b are fixed. Therefore, the stress is hardly transmitted to a joined part between second exposed part 62a and first part 72a. Thus, it is possible to suppress disconnection of second terminal 62 and second electric wire 72 at first part 72a of second electric wire 72.

Note that second part 72b of second electric wire 72 is a part of second electric wire 72 in which the core wire is covered with an insulating film. Therefore, at second part 72b of second electric wire 72, second terminal 62 and second electric wire 72 are fixed to each other, but are not electrically connected.

In second electric wire 72, second part 72b in which the core wire is covered with an insulating film has a wire diameter larger than a wire diameter of first part 72a by an insulating film. Therefore, second part 72b of second electric wire 72 is disposed in the recess between the pair of protrusions at the distal end of second exposed part 62a (in the present exemplary embodiment, second exposed part 62a positioned on the outer side) having a wider width out of the pair of second exposed parts 62a of second terminal 62, and is joined to second terminal 62 by caulking the pair of protrusions.

As illustrated in Figs. 7 and 8, brush holder 50 further includes recess 53 formed in a concave shape on the outer surface side of brush holder 50. In the present exemplary embodiment, recess 53 is formed by providing walls 54 protruding outward on an outer surface of brush holder 50. Walls 54 are partition walls formed in a screen shape on the outer surface of brush holder 50. Recess 53 is a part surrounded by continuous walls 54. Note that recess 53 is not limited to this structure as long as a cross-sectional shape is formed in a concave shape. For example, recess 53 may have a structure formed by recessing the outer surface of brush holder 50 inward.

Recess 53 has three regions of first recess 53a, second recess 53b, and third recess 53c.

First recess 53a is a region where first exposed part 61a of first terminal 61 is positioned. That is, first recess 53a functions as a first disposition space in which first exposed part 61a is disposed. Specifically, walls 54 constituting first recess 53a surround first exposed part 61a. In the present exemplary embodiment, the pair of first exposed parts 61a are positioned in first recess 53a. That is, walls 54 constituting first recess 53a surround the pair of first exposed parts 61a. In this case, since one of the pair of first exposed parts 61a has a wider width, first recess 53a has a wider width at a part of first exposed part 61a having a wider width. First recess 53a is formed such that an outer part is wider than an inner part. Specifically, first recess 53a has an egg shape in plan view. That is, wall 54 constituting first recess 53a has an egg shape.

First hollow 54a for pulling out first electric wire 71 connected to first terminal 61 is provided in a part of wall 54 constituting first recess 53a. In the present exemplary embodiment, first electric wire 71 is disposed in first hollow 54a and is sandwiched between walls 54 on both sides of first hollow 54a. For example, first electric wire 71 is lightly press-fitted into first hollow 54a. As a result, even though a tensile force is applied to first electric wire 71 or the first electric wire vibrates, it is possible to suppress first electric wire 71 from being detached from first terminal 61.

Second recess 53b is a region where second exposed part 62a of second terminal 62 is positioned. That is, second recess 53b functions as a second disposition space in which second exposed part 62a is disposed. Specifically, walls 54 constituting second recess 53b surround second exposed part 62a. The pair of second exposed parts 62a are positioned in second recess 53b. That is, walls 54 constituting second recess 53b surround the pair of second exposed parts 62a. In this case, since one of the pair of second exposed parts 62a has a wider width, second recess 53b has a wider width at a part of second exposed part 62a having a wider width. Second recess 53b is formed such that an outer part is wider than an inner part. Specifically, second recess 53b has an egg shape in plan view. That is, wall 54 constituting second recess 53b has an egg shape.

Second hollow 54b for pulling out second electric wire 72 connected to second terminal 62 is provided in a part of wall 54 constituting second recess 53b. In the present exemplary embodiment, second electric wire 72 is disposed in second hollow 54b and is sandwiched between walls 54 on both sides of second hollow 54b. For example, second electric wire 72 is lightly press-fitted into second hollow 54b. As a result, even though a tensile force is applied to second electric wire 72 or the second electric wire vibrates, it is possible to suppress second electric wire 72 from being detached from second terminal 62.

As illustrated in Fig. 8, first recess 53a and second recess 53b are present in a region of less than 180° about rotating shaft 21 in plan view when brush holder 50 is viewed from the outer surface side. That is, in the plan view, an angle formed by a line connecting shaft center C of rotating shaft 21 and a central part of first recess 53a and a line connecting shaft center C of rotating shaft 21 and a central part of second recess 53b is less than 180°. In this case, the angle formed by the line connecting shaft center C of rotating shaft 21 and the central part of first recess 53a and the line connecting shaft center C of rotating shaft 21 and the central part of second recess 53b may be less than 90°, and is about 60° in the present exemplary embodiment. That is, first recess 53a and second recess 53b are formed in such a positional relationship of an inverted "V"-shape around rotating shaft 21.

Note that second recess 53b has the same shape as first recess 53a. Specifically, first recess 53a and second recess 53b are formed at line-symmetrical positions about third recess 53c.

In addition, a positional relationship between first terminal 61 and second terminal 62 is also similar to a positional relationship between first recess 53a and second recess 53b. That is, first exposed part 61a of first terminal 61 disposed in first recess 53a and second exposed part 62a of second terminal 62 disposed in second recess 53b are present in a region of less than 180° about rotating shaft 21 in plan view when brush holder 50 is viewed from the outer surface side. For example, in the plan view, an angle formed by a line connecting shaft center C of rotating shaft 21 and first exposed part 61a having a narrower width and a line connecting shaft center C of rotating shaft 21 and second exposed part 62a having a narrower width is less than 180°, preferably less than 90°, and is about 60° in the present exemplary embodiment. That is, first terminal 61 and second terminal 62 are attached to brush holder 50 in such a positional relationship of an inverted "V"-shape about rotating shaft 21.

As illustrated in Figs. 7 and 8, third recess 53c is a region positioned between first recess 53a and second recess 53b and integrally formed with first recess 53a and second recess 53b. That is, third recess 53c is spatially continuously connected to each of first recess 53a and second recess 53b. Recess 53 is one recessed space region formed by continuously integrating first recess 53a, second recess 53b, and third recess 53c. Therefore, walls 54 constituting first recess 53a, second recess 53b, and third recess 53c are continuous.

In the present exemplary embodiment, third recess 53c has a bridge formed in a bridge shape to bridge first recess 53a and second recess 53b. Specifically, a planar view shape of third recess 53c is a substantially rectangular shape, and is formed at a position shifted outward between first recess 53a and second recess 53b. That is, third recess 53c has a protruding part formed to protrude outward from the bridge in plan view. As a result, the planar view shape of recess 53 is a shape in which the protruding part protruding outward from the bridge is formed based on a H-shape formed by first recess 53a, second recess 53b, and the bridge of third recess 53c.

Capacitor 80 is disposed in third recess 53c. That is, third recess 53c functions as a third disposition space in which capacitor 80 is disposed. Specifically, body 81 of capacitor 80 is housed in third recess 53c. That is, third recess 53c functions as a capacitor housing for housing capacitor 80. Any shape can be adopted as the shape of third recess 53c as long as body 81 of capacitor 80 can be housed. In the present exemplary embodiment, body 81 of capacitor 80 is housed in third recess 53c in such a posture not to protrude from an upper end face of wall 54 of third recess 53c.

Capacitor 80 is a lead-type capacitor (capacitor with a lead), has body 81, and has first lead 82a and second lead 82b that are a pair of leads. Body 81 includes a pair of anode and cathode, an electrolyte and a dielectric disposed between the pair of anode and cathode, and an insulating outer frame member covering the pair of anode and cathode, the electrolyte, and the dielectric. In addition, first lead 82a and second lead 82b are lead pins (lead terminals) pulled out from body 81, and are formed by conductive wires such as metal wires. Each of first lead 82a and second lead 82b is connected to an anode or a cathode of body 81.

Capacitor 80 is a capacitor for noise reduction, and is connected in parallel between first terminal 61 and second terminal 62. A capacitance of capacitor 80 is, for example, 0.001 µP. As a result, noise with a frequency in a band of 30 to 100 MHz can be effectively reduced. In addition, capacitor 80 is preferably excellent in heat resistance, and is, for example, a ceramic capacitor. Note that the capacitance of capacitor 80 is not limited to 0.001 µF, and is set in accordance with the frequency of noise to be reduced.

First lead 82a of capacitor 80 is bent to be housed in recess 53 and is joined to first exposed part 61a of first terminal 61. That is, first lead 82a of capacitor 80 is routed from third recess 53c to pass through first recess 53a surrounding first terminal 61. In the present exemplary embodiment, a root part of first lead 82a is positioned in third recess 53c, and a distal end of first lead 82a is positioned in first recess 53a.

In first recess 53a, first lead 82a of capacitor 80 is joined to first exposed part 61a of first terminal 61 by being caulked to a part of first exposed part 61a of first terminal 61 together with first electric wire 71. In the present exemplary embodiment, a distal end of first lead 82a of capacitor 80 is caulked to one of the pair of first exposed parts 61a of first terminal 61 together with first part 71a of first electric wire 71. As a result, in first part 71a of first electric wire 71, first lead 82a of capacitor 80 is electrically connected to first terminal 61 together with first electric wire 71 and is fixed to each other.

Specifically, similarly to first electric wire 71, first lead 82a of capacitor 80 is disposed in the recess between the pair of protrusions at the distal end of first exposed part 61a (in the present exemplary embodiment, inner first exposed part 61a) having a narrower width out of the pair of first exposed parts 61a of first terminal 61, and is joined to first terminal 61 together with first electric wire 71 by caulking the pair of protrusions. In this case, as illustrated in Fig. 10, first lead 82a of capacitor 80 and first part 71a of first electric wire 71 may be disposed in the recess between the pair of protrusions of first exposed part 61a in this order in a vertical direction.

Note that although not illustrated, the distal end of first lead 82a and first part 71a of first electric wire 71 are further joined to first exposed part 61a by solder. That is, the distal end of first lead 82a, first part 71a of first electric wire 71, and first terminal 61 are not only joined by caulking but also joined by solder.

Similarly, for second lead 82b of capacitor 80, second lead 82b is bent to be housed in recess 53, and is joined to second exposed part 62a of second terminal 62. That is, second lead 82b of capacitor 80 is routed from third recess 53c to pass through second recess 53b surrounding second terminal 62. In the present exemplary embodiment, a root part of second lead 82b is positioned in third recess 53c, and a distal end of first lead 82a is positioned in second recess 53b.

In second recess 53b, second lead 82b of capacitor 80 is joined to second exposed part 62a of second terminal 62 by being caulked to a part of second exposed part 62a of second terminal 62 together with second electric wire 72. A distal end of second lead 82b of capacitor 80 is caulked to one of the pair of second exposed parts 62a of second terminal 62 together with first part 72a of second electric wire 72. As a result, at first part 72a of second electric wire 72, second lead 82b of capacitor 80 is electrically connected to second terminal 62 together with second electric wire 72 and is fixed to each other.

Specifically, similarly to second electric wire 72, second lead 82b of capacitor 80 is disposed in the recess between the pair of protrusions at the distal end of second exposed part 62a (in the present exemplary embodiment, inner second exposed part 62a) having a narrower width out of the pair of second exposed parts 62a of second terminal 62, and is joined to second terminal 62 together with second electric wire 72 by caulking the pair of protrusions. In this case, similarly to first lead 82a and first electric wire 71 illustrated in Fig. 10, second lead 82b of capacitor 80 and first part 72a of second electric wire 72 may be disposed in the recess portion between the pair of protrusions of second exposed part 62a in this order in the vertical direction.

Note that although not illustrated, the distal end of second lead 82b and first part 72a of second electric wire 72 are further joined to second exposed part 62a by solder. That is, the distal end of second lead 82b, first part 72a of second electric wire 72, and second terminal 62 are not only joined by caulking but also joined by solder.

In addition, as illustrated in Fig. 4, recess 53 is filled with sealant 140. Specifically, first recess 53a, second recess 53b, and third recess 53c are filled with sealant 140. Sealant 140 has a function of securing a withstand voltage of a charging unit (first exposed part 61a of first terminal 61, second exposed part 62a of second terminal 62, first part 71a of first electric wire 71, first part 72a of second electric wire 72, and first lead 82a and second lead 82b of capacitor 80) exposed on the outer surface side of brush holder 50 and waterproofing the charging unit. Therefore, sealant 140 is made of, for example, an insulating resin material containing a resin material such as silicone as a main component. Sealant 140 can be formed by applying a liquid insulating resin material to recess 53 and solidifying the material.

Note that, in the present exemplary embodiment, sealant 140 is filled in recess 53 until the sealant is flush with the upper end face of wall 54 constituting recess 53, but the present disclosure is not limited thereto. Sealant 140 may be formed such that at least the above-described charging unit is not exposed from sealant 140. Note that a part of body 81 of capacitor 80 may be exposed from sealant 140.

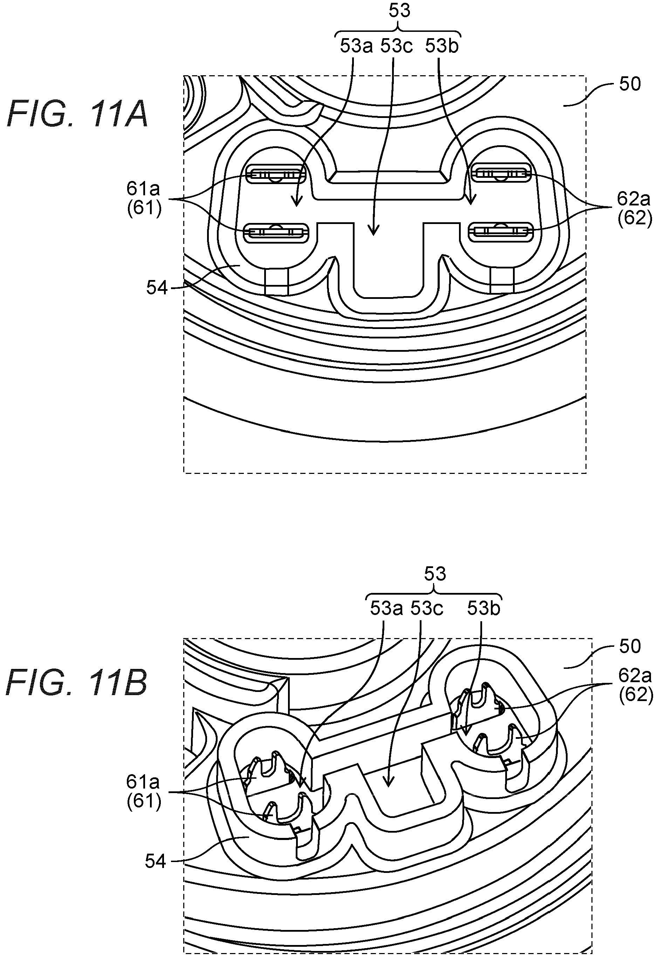

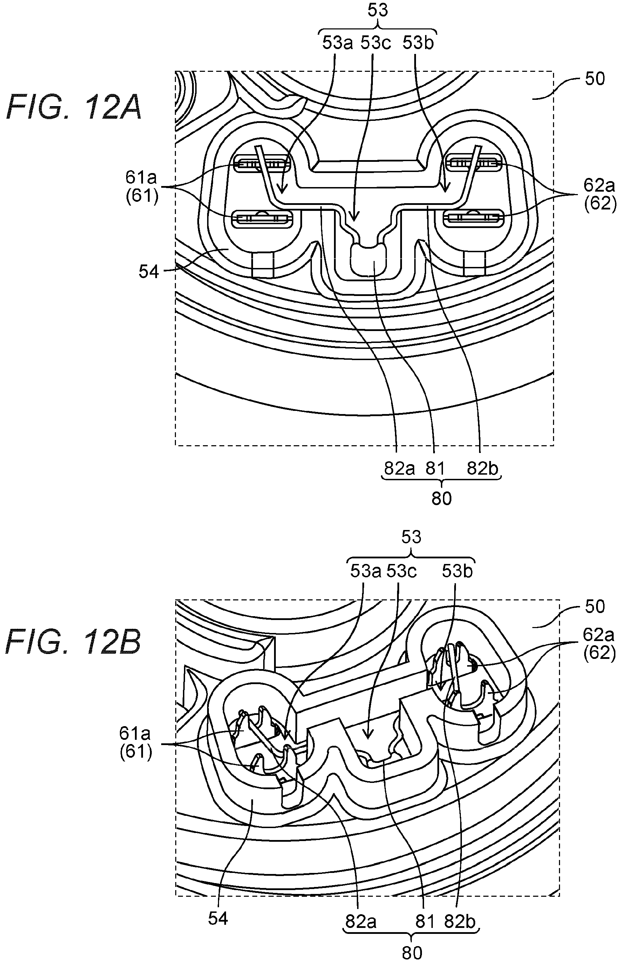

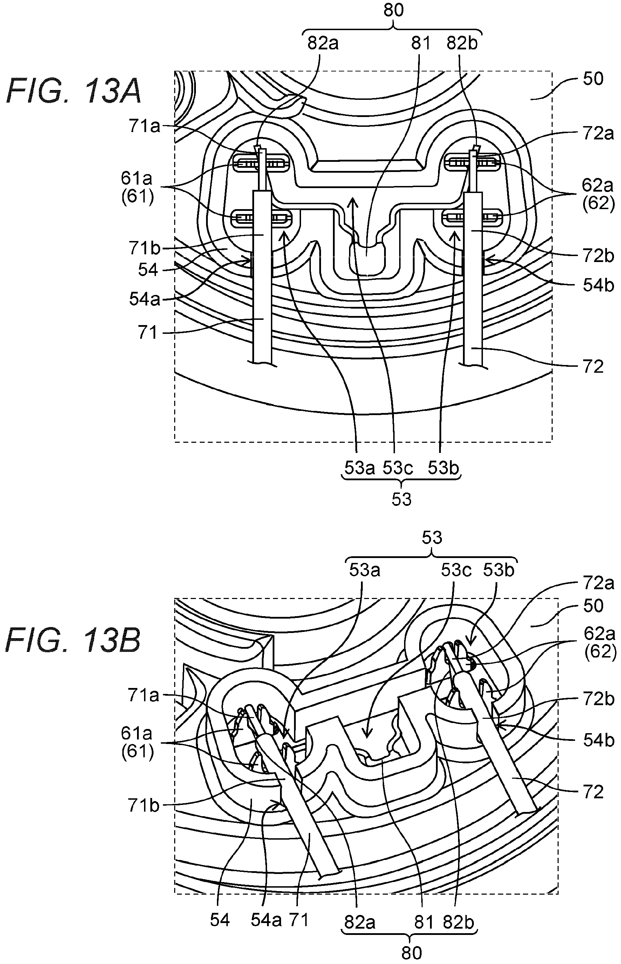

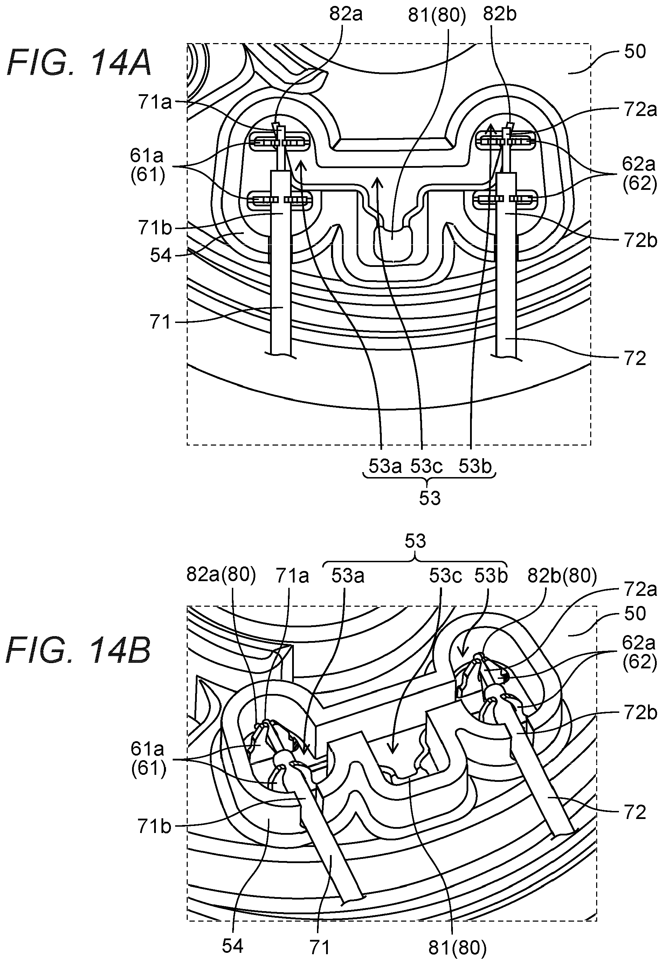

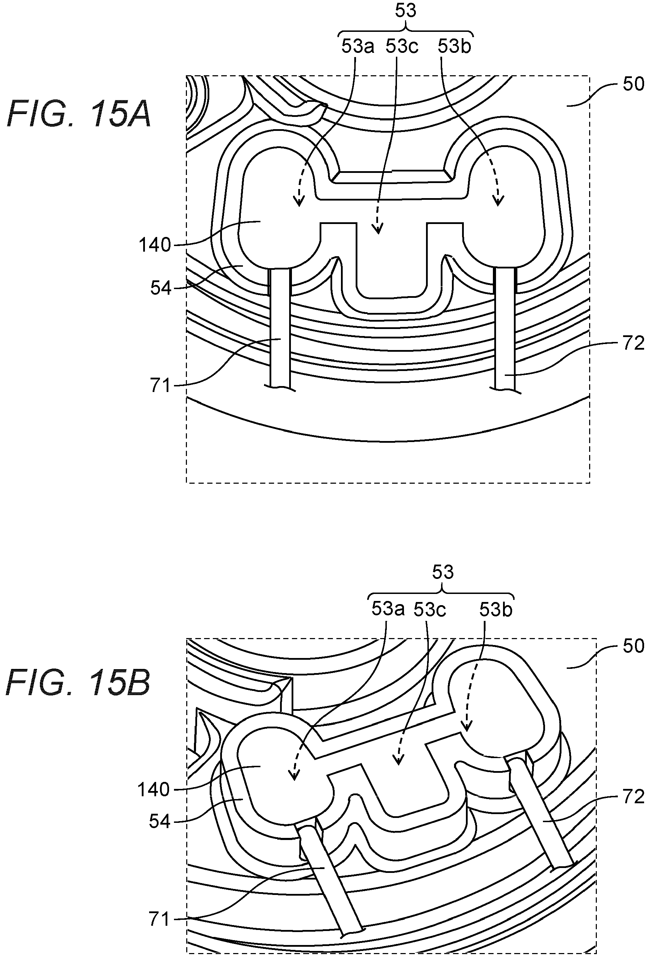

Next, a method for joining first terminal 61 and second terminal 62 and first electric wire 71 and second electric wire 72 to capacitor 80 will be described with reference to Figs. 11A to 15B. Figs. 11A to 15B are diagrams for describing a method for joining first terminal 61 and second terminal 62 and first electric wire 71 and second electric wire 72 to capacitor 80. Fig. 11A is an enlarged plan view of recess 53 of brush holder 50 and a part around the recess in a step when first terminal 61 and second terminal 62 are attached to brush holder 50. Fig. 11B is an enlarged perspective view of recess 53 of brush holder 50 and a part around the recess in the step of Fig. 11A. Fig. 12A is an enlarged plan view of recess 53 of brush holder 50 and a part around the recess in a step when capacitor 80 is disposed in recess 53 of brush holder 50. Fig. 12B is an enlarged perspective view of recess 53 of brush holder 50 and a part around the recess in the step of Fig. 12A. Fig. 13A is an enlarged plan view of recess 53 of brush holder 50 and a part around the recess in a step when first electric wire 71 and second electric wire 72 are disposed in recess 53 of brush holder 50. Fig. 13B is an enlarged perspective view of recess 53 of brush holder 50 and a part around the recess in the step of Fig. 13A. Fig. 14A is an enlarged plan view of recess 53 of brush holder 50 and a part around the recess in a step when first electric wire 71, first lead 82a of capacitor 80, and first terminal 61 are joined by caulking and when second electric wire 72, second lead 82b of capacitor 80, and second terminal 62 are joined by caulking. Fig. 14B is an enlarged perspective view of recess 53 of brush holder 50 and a part around the recess in the step of Fig. 14A. Fig. 15A is an enlarged plan view of recess 53 of brush holder 50 and a part around the recess in a step when recess 53 of brush holder 50 is filled with sealant 140. Fig. 15B is an enlarged perspective view of recess 53 of brush holder 50 and a part around the recess in the step of Fig. 15A.

First, as illustrated in Figs. 11A and 11B, first terminal 61 and second terminal 62 are attached to brush holder 50. First terminal 61 and second terminal 62 are attached to brush holder 50 such that first exposed part 61a of first terminal 61 and second exposed part 62a of second terminal 62 are exposed on the outer surface side of brush holder 50.

Specifically, for first terminal 61, the pair of first exposed parts 61a are inserted into the pair of through-holes formed in first recess 53a of brush holder 50 from the inside to the outside of brush holder 50. As a result, first terminal 61 can be attached to brush holder 50 in a state where the pair of first exposed parts 61a are exposed on the outer surface side of brush holder 50 in first recess 53a.

Similarly, for second terminal 62, the pair of second exposed parts 62a are inserted into the pair of through-holes formed in second recess 53b of brush holder 50 from the inside to the outside of brush holder 50. As a result, second terminal 62 can be attached to brush holder 50 in a state where the pair of second exposed parts 62a are exposed on the outer surface side of brush holder 50 in second recess 53b.

Next, as illustrated in Figs. 12A and 12B, capacitor 80 is set in brush holder 50. In the present exemplary embodiment, capacitor 80 is set in brush holder 50 such that capacitor 80 is housed in recess 53 of brush holder 50.

Specifically, body 81 is housed in third recess 53c of recess 53, and the distal end of first lead 82a is positioned between the pair of protrusions in first exposed part 61a having a narrower width out of the pair of first exposed parts 61a of first terminal 61. Capacitor 80 is set in recess 53 such that the distal end of second lead 82b is positioned between the pair of protrusions in second exposed part 62a having a narrower width out of the pair of second exposed parts 62a of second terminal 62. At this time, first lead 82a and second lead 82b of capacitor 80 may be bent to be housed in recess 53 in advance.

Next, as illustrated in Figs. 13A and 13B, first electric wire 71 and second electric wire 72 are set in brush holder 50. First electric wire 71 and second electric wire 72 are set in brush holder 50 such that distal ends of first electric wire 71 and second electric wire 72 are positioned in recess 53 of brush holder 50.

Specifically, for first electric wire 71, first electric wire 71 is set in first recess 53a such that first part 71a is positioned between the pair of protrusions in first exposed part 61a having a smaller width out of the pair of first exposed parts 61a of first terminal 61 and second part 71b is positioned between the pair of protrusions in first exposed part 61a having a wider width out of the pair of first exposed parts 61a of first terminal 61. At this time, since first lead 82a of capacitor 80 is already disposed on one of the pair of first exposed parts 61a, first part 71a of first electric wire 71 is disposed on first lead 82a of capacitor 80 as illustrated in Fig. 10.

In this step, a part of first electric wire 71 is pushed into first hollow 54a formed in wall 54 constituting first recess 53a, and thus, a part of first electric wire 71 is lightly press-fitted into first hollow 54a. As a result, first electric wire 71 is set in brush holder 50 in a state of being fixed to first hollow 54a and being pulled out from first recess 53a.

Similarly, for second electric wire 72, second electric wire 72 is set in second recess 53b such that first part 72a is positioned between the pair of protrusions in second exposed part 62a having a narrower width out of the pair of second exposed parts 62a of second terminal 62 and second part 72b is positioned between the pair of protrusions in second exposed part 62a having a wider width out of the pair of second exposed parts 62a of second terminal 62. At this time, since second lead 82b of capacitor 80 is already disposed on one of the pair of second exposed parts 62a, first part 72a of second electric wire 72 is disposed on second lead 82b of capacitor 80.

Similarly to first electric wire 71, a part of second electric wire 72 is pushed into second hollow 54b formed in wall 54 constituting second recess 53b, and thus, a part of second electric wire 72 is lightly press-fitted into second hollow 54b. As a result, second electric wire 72 is set in brush holder 50 in a state of being fixed to second hollow 54b and being pulled out from second recess 53b.

Next, as illustrated in Figs. 14A and 14B, first electric wire 71 and capacitor 80 are joined to first terminal 61, and second electric wire 72 and capacitor 80 are joined to second terminal 62. For first electric wire 71, first part 71a of first electric wire 71 and first lead 82a of capacitor 80 are joined to one of the pair of first exposed parts 61a of first terminal 61, and second part 71b of first electric wire 71 is joined to the other of the pair of first exposed parts 61a of first terminal 61. For second electric wire 72, first part 72a of second electric wire 72 and second lead 82b of capacitor 80 are joined to one of the pair of second exposed parts 62a of second terminal 62, and second part 72b of second electric wire 72 is joined to the other of the pair of second exposed parts 62a of second terminal 62.

Specifically, in first recess 53a, in a state where first part 71a of first electric wire 71 and first lead 82a of capacitor 80 are disposed between the pair of protrusions in first exposed part 61a having a narrower width out of the pair of first exposed parts 61a of first terminal 61, the pair of protrusions of first exposed part 61a having a narrower width are caulked, and thus, first part 71a of first electric wire 71 and first lead 82a of capacitor 80 are fixed to first exposed part 61a having a narrower width. In addition, in a state where second part 71b of first electric wire 71 is disposed between the pair of protrusions in first exposed part 61a having a wider width out of the pair of first exposed parts 61a of first terminal 61, the pair of protrusions of first exposed part 61a having a wider width are caulked, and thus, second part 71b of first electric wire 71 is fixed to first exposed part 61a having a wider width.

Similarly, in second recess 53b, in a state where second part 72b of second electric wire 72 and second lead 82b of capacitor 80 are disposed between the pair of protrusions in second exposed part 62a having a narrower width of the pair of second exposed parts 62a of second terminal 62, the pair of protrusions in second exposed part 62a having a narrower width are caulked, and thus, first part 71a of the second electric wire 72 and second lead 82b of capacitor 80 are fixed to second exposed part 62a having a narrower width. In addition, in a state where second part 72b of second electric wire 72 is disposed between the pair of protrusions in second exposed part 62a having a wider width out of the pair of second exposed parts 62a of second terminal 62, the pair of protrusions of second exposed part 62a having a wider width are caulked, and thus, second part 72b of second electric wire 72 is fixed to second exposed part 62a having a wider width.

Although not illustrated, a joined part between first exposed part 61a having a narrower width in first terminal 61 and second exposed part 62a having a narrower width in second terminal 62 is further joined by solder after this caulking joining.

Specifically, solder is applied to a part where first part 71a of first electric wire 71 and first lead 82a of capacitor 80 are caulked by first exposed part 61a of first terminal 61 having a narrower width, and is cured. In addition, solder is applied to a part where first part 72a of second electric wire 72 and second lead 82b of capacitor 80 are caulked by second exposed part 62a of second terminal 62 having a narrower width, and is cured.

As illustrated in Figs. 15A and 15B, sealant 140 is formed in recess 53 of brush holder 50. In the present exemplary embodiment, each of first recess 53a, second recess 53b, and third recess 53c is filled with sealant 140.

Specifically, the liquid insulating resin material is applied to recess 53, each of first recess 53a, second recess 53b, and third recess 53c is filled with the liquid insulating resin material. At this time, since first recess 53a, second recess 53b, and third recess 53c are continuous spaces, the liquid insulating resin material may be injected into any one of first recess 53a, second recess 53b, and third recess 53c, and thus, entire recess 53 may be filled with the liquid insulating resin material. For example, the liquid insulating resin material is injected only into third recess 53c, the liquid insulating resin material may flow from third recess 53c into first recess 53a and second recess 53b, and entire recess 53 may be filled with the liquid insulating resin material. Alternatively, the liquid insulating resin material may be simultaneously injected into two or all of first recess 53a, second recess 53b, and third recess 53c, and thus, entire recess 53 may be filled with the liquid insulating resin material. After recess 53 is filled with the liquid insulating resin material, the liquid insulating resin material is dried and cured. As a result, it is possible to form sealant 140 with which recess 53 is filled.

As described above, according to electric motor 1 according to the present exemplary embodiment, lead-type capacitor 80 connected in parallel between the terminals of first terminal 61 and second terminal 62 is housed in recess 53 formed on the outer surface side of brush holder 50. Specifically, recess 53 of brush holder 50 includes first recess 53a formed to surround first exposed part 61a of first terminal 61, second recess 53b formed to surround second exposed part 62a of second terminal 62, and third recess 53c positioned between first recess 53a and second recess 53b and integrally formed continuously with first recess 53a and second recess 53b. Body 81 of capacitor 80 is housed in third recess 53c. First lead 82a of capacitor 80 is joined to first exposed part 61a of first terminal 61, and second lead 82b of capacitor 80 is joined to second exposed part 62a of second terminal 62.

As described above, instead of housing capacitor 80 inside electric motor 1, capacitor 80 is housed in recess 53 formed on the outer surface side of brush holder 50 to which first terminal 61 and second terminal 62 are attached, and thus, a thin electric motor can be easily realized. In addition, it is possible to realize electric motor 1 including capacitor 80 without changing an outer dimension of the electric motor. For example, it is possible to realize electric motor 1 capable of reducing noise without changing a conventional outer dimension of ultra-thin electric motor 1.

Furthermore, capacitor 80 is disposed outside brush holder 50 instead of inside brush holder 50, and thus, it is not necessary to provide a space for housing capacitor 80 inside brush holder 50. Further, it is possible to avoid an increase in a temperature of capacitor 80 when capacitor 80 is disposed inside brush holder 50. In addition, capacitor 80 is disposed on the outer surface side of brush holder 50 made of resin, and thus, heat dissipation of capacitor 80 can be improved as compared with a case where the capacitor is disposed on the inner surface side of brush holder 50. As a result, it is possible to reduce a function of a short-circuit failure mode of capacitor 80 or to reduce the capacitance of capacitor 80 by suppressing the increase in the temperature of capacitor 80. Accordingly, it is possible to deteriorate a noise reduction effect by the capacitor.

Further, since the lead-type capacitor is used as capacitor 80 and first lead 82a and second lead 82b of capacitor 80 can be joined to first terminal 61 and second terminal 62 from the outside of brush holder 50, capacitor 80 can be connected in parallel between the terminals of first terminal 61 and second terminal 62 without requiring complicated processing. Accordingly, even though capacitor 80 is used, electric motor 1 excellent in mass productivity can be achieved.

As described above, according to electric motor 1 according to the present exemplary embodiment, even though capacitor 80 for noise reduction is used, it is possible to realize electric motor 1 that is easily thinned, is excellent in heat dissipation of capacitor 80, and is excellent in mass productivity.

Moreover, according to electric motor 1 according to the present exemplary embodiment, capacitor 80 can be easily selected in accordance with the frequency of noise to be reduced without changing the internal structure of the electric motor. For example, in the case of the structure in which the capacitor is housed inside the electric motor, when it is desired to change the capacitance of the capacitor, it is necessary to review the internal structure itself of the electric motor. However, as in electric motor 1 according to the present exemplary embodiment, capacitor 80 is housed in recess 53 formed on the outer surface side of brush holder 50, and thus, the capacitance of capacitor 80 can be easily changed in accordance with the frequency of noise to be reduced. For example, in a vehicle motor for Japan, reduction of noise near a frequency modulation (FM) band of about 30 to 100 MHz by electromagnetic compatibility (EMC) measurement has been the mainstream, but there are cases where reduction of noise in a frequency band different from the above-mentioned frequency band is required in countries around the world. In this case, in electric motor 1 according to the present exemplary embodiment, capacitor 80 having the capacitance corresponding to the frequency of noise to be reduced may be selected and replaced without changing the internal structure of electric motor 1.

Further, in electric motor 1 according to the present exemplary embodiment, the lead-type capacitor is used as capacitor 80, first lead 82a of capacitor 80 is directly joined to first terminal 61, and second lead 82b of capacitor 80 is directly joined to second terminal 62. Capacitor 80 used in the present exemplary embodiment is an existing product (standard product) that can be purchased on the market, and first lead 82a and second lead 82b of capacitor 80 having a length of the existing product are used as they are. Therefore, an inter-terminal distance between first terminal 61 and second terminal 62 attached to brush holder 50 is a distance that first lead 82a and second lead 82b of capacitor 80 of the existing product reach. That is, in the present exemplary embodiment, the inter-terminal distance between first terminal 61 and second terminal 62 is short. For example, first terminal 61 and second terminal 62 are attached to brush holder 50 in such a positional relationship of an inverted "V"-shape about rotating shaft 21.

In addition, as described above, the inter-terminal distance between first terminal 61 and second terminal 62 is shortened, an inter-line distance between first electric wire 71 and second electric wire 72 can also be shortened. As a result, first electric wire 71 pulled out from first recess 53a and second electric wire 72 pulled out from second recess 53b can be easily brought close to each other. That is, first electric wire 71 and second electric wire 72 are easily routed. As a result, a lead time of a manufacturing step can be shortened, and automation of the manufacturing step becomes easy.

As described above, electric motor 1 according to the present exemplary embodiment includes commutator 30, first brush 41 and second brush 42 that are in contact with commutator 30, brush holder 50 that holds first brush 41 and second brush 42, first terminal 61 that has first exposed part 61a exposed from the outer surface side of brush holder 50 and is electrically connected to first brush 41, second terminal 62 that has second exposed part 62a exposed from the outer surface side of brush holder 50 and is electrically connected to the second brush, first electric wire 71 that is joined to first exposed part 61a of first terminal 61, second electric wire 72 that is joined to second exposed part 62a of second terminal 62, and capacitor 80 that has first lead 82a joined to first exposed part 61a of first terminal 61 and second lead 82b joined to second exposed part 62a of second terminal 62. Brush holder 50 has recess 53 formed on the outer surface side of brush holder 50. Recess 53 includes first recess 53a in which first exposed part 61a of first terminal 61 is positioned, second recess 53b in which second exposed part 62a of second terminal 62 is positioned, and third recess 53c positioned between first recess 53a and second recess 53b and integrally formed with first recess 53a and second recess 53b. Body 81 of capacitor 80 is housed in third recess 53c.

As a result, even though the capacitor for noise reduction is used, it is possible to realize an electric motor that is easily thinned, is excellent in heat dissipation of the capacitor, and is excellent in mass productivity.

In electric motor 1, brush holder 50 constitutes an outer frame of electric motor 1.

With this configuration, the heat dissipation of capacitor 80 disposed on the outer surface side of brush holder 50 can be further improved. Therefore, it is possible to further suppress a defect caused by the increase in the temperature of capacitor 80.

In electric motor 1, third recess 53c has a bridge formed in a bridge shape.

With this configuration, first recess 53a and second recess 53b can be connected by third recess 53c. As a result, first lead 82a and second lead 82b of capacitor 80 can be housed in recess 53, and first lead 82a and second lead 82b can be easily routed from third recess 53c to first recess 53a and second recess 53b.

Moreover, for example, even in a case where the conventional electric motor includes the brush holder that does not include third recess 53c but includes only first recess 53a and second recess 53b, since brush holder 50 is the resin molded product, bridge-shaped third recess 53c can be easily added between first recess 53a and second recess 53b. As a result, brush holder 50 having the structure according to the present exemplary embodiment can be easily obtained based on the brush holder of the conventional electric motor having only first recess 53a and second recess 53b. Therefore, even though third recess 53c is added to house capacitor 80, it is possible to avoid complicated routing of first electric wire 71 pulled out from first recess 53a and complicated routing of second electric wire 72 pulled out from second recess 53b. That is, even though third recess 53c is added to house capacitor 80, first electric wire 71 and second electric wire 72 can be easily routed as in the conventional electric motor.

In electric motor 1, first electric wire 71 and first lead 82a of capacitor 80 are joined to first exposed part 61a by being caulked to a part of first exposed part 61a of first terminal 61. Second electric wire 72 and second lead 82b of capacitor 80 are joined to second exposed part 62a by being caulked to a part of second exposed part 62a of second terminal 62.

With this configuration, first electric wire 71, first lead 82a of capacitor 80, and first exposed part 61a of first terminal 61 can be firmly joined. In addition, second electric wire 72, second lead 82b of capacitor 80, and second exposed part 62a of second terminal 62 can be firmly joined.

In this case, in electric motor 1 according to the present exemplary embodiment, first electric wire 71 and first terminal 61 are caulked and fixed at two locations. Further, second electric wire 72 and second terminal 62 are caulked and fixed at two locations.

Specifically, first terminal 61 includes the pair of first exposed parts 61a. Second terminal 62 has the pair of second exposed parts 62a. Each of first electric wire 71 and second electric wire 72 has a core wire made of a conductor and an insulating film coating the core wire. First part 71a (core wire exposed part) where the core wire is exposed on the distal end side of first electric wire 71 and first lead 82a are caulked to one of the pair of first exposed parts 61a. In first electric wire 71, second part 72b (insulating coating part) where the core wire is not exposed is caulked to the other of the pair of first exposed parts 61a. First part 72a and second lead 82b where the core wire is exposed on the distal end side of second electric wire 72 are caulked to one of the pair of second exposed parts 62a. In second electric wire 72, second part 72b where the core wire is not exposed is caulked to the other of the pair of second exposed parts 62a.

As described above, first electric wire 71 is caulked by first exposed part 61a of first terminal 61 at two locations of the core wire exposed part and the insulating coating part of first electric wire 71, and second electric wire 72 is caulked by second exposed part 62a of second terminal 62 at two locations of the core wire exposed part and the insulating coating part of second electric wire 72. Thus, first electric wire 71 and second electric wire 72 can be firmly fixed to first terminal 61 and second terminal 62, respectively. As a result, even though a tensile force is applied to first electric wire 71 and second electric wire 72, disconnection between first electric wire 71 and first terminal 61 can be suppressed, and disconnection between second electric wire 72 and second terminal 62 can be suppressed.

In electric motor 1, first lead 82a of capacitor 80 and first electric wire 71 are joined to first exposed part 61a of first terminal 61 by solder, and second lead 82b of capacitor 80 and second electric wire 72 are joined to second exposed part 62a of second terminal 62 by solder.

As described above, first lead 82a and first electric wire 71 are joined by solder, and second lead 82b and second electric wire 72 are joined by solder. Thus, reliability of electrical and mechanical connection between first lead 82a and first electric wire 71 is improved, and reliability of electrical and mechanical connection between second lead 82b and second electric wire 72 is improved.

In this case, first lead 82a and first electric wire 71 may be further joined to a part where first lead 82a and first electric wire 71 are caulked by first exposed part 61a by solder. Similarly, second lead 82b and second electric wire 72 may be further joined to a part where second lead 82b and second electric wire 72 are caulked by second exposed part 62a by solder. As a result, the reliability of the electrical and mechanical connection between first lead 82a and first electric wire 71 is further improved, and the reliability of the electrical and mechanical connection between second lead 82b and second electric wire 72 is further improved.

In electric motor 1, first recess 53a, second recess 53b, and third recess 53c are filled with sealant 140. Specifically, entire recess 53 is filled with sealant 140.

With this configuration, in first recess 53a, a joined part between first terminal 61, first lead 82a, and first electric wire 71 is covered with sealant 140. In second recess 53b, a joined part between second terminal 62, second lead 82b, and second electric wire 72 is covered with sealant 140. In third recess 53c, body 81 of capacitor 80 is covered with sealant 140. As a result, it is possible to improve a waterproof property and a withstand voltage property.

In particular, in electric motor 1 according to the present exemplary embodiment, third recess 53c is formed integrally and continuously with first recess 53a and second recess 53b. That is, first recess 53a and second recess 53b are connected by third recess 53c.

As a result, as compared with a case where first recess 53a and second recess 53b are separated, the liquid insulating resin material can be easily applied when sealant 140 is formed in first recess 53a and second recess 53b. For example, since the liquid insulating resin material flows into the remaining part among first recess 53a, second recess 53b, and third recess 53c by applying the liquid insulating resin material to any one of first recess 53a, second recess 53b, and third recess 53c, the liquid insulating resin material can be easily applied to entire recess 53.

In electric motor 1, as illustrated in Fig. 10, first lead 82a of capacitor 80 and first part 71a of first electric wire 71 are disposed in the recess of one first exposed part 61a of the pair of first exposed parts 61a of first terminal 61 in this order in the vertical direction. Second lead 82b of capacitor 80 and first part 72a of second electric wire 72 are disposed in the recess of one second exposed part 62a of the pair of second exposed parts 62a of second terminal 62 in this order in the vertical direction.

As described above, first lead 82a and first part 71a of first electric wire 71 can be easily caulked by the pair of protrusions of first exposed part 61a of first terminal 61 by disposing first part 71a of first electric wire 71 on first lead 82a of capacitor 80 and disposing first part 72a of second electric wire 72 on second lead 82b of capacitor 80. In addition, second lead 82b and first part 72a of second electric wire 72 can be easily caulked by the pair of protrusions of second exposed part 62a of second terminal 62. As a result, caulking quality can be improved.

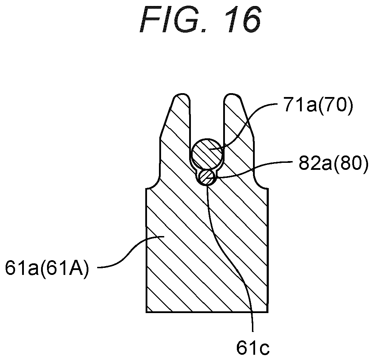

Fig. 16 is a cross-sectional view illustrating a configuration of first exposed part 61a of first terminal 61 according to a modified example. In this case, as in first exposed part 61a of first terminal 61A illustrated in Fig. 16, hollow 61c in which first lead 82a of capacitor 80 is housed may be formed at the bottom between the pair of protrusions at the distal end of first exposed part 61a. As a result, first lead 82a and first part 71a of first electric wire 71 can be caulked more easily by the pair of protrusions of first exposed part 61a of first terminal 61A. Note that, although not illustrated, for second terminal 62, a hollow in which second lead 82b of capacitor 80 is housed may be formed at the bottom between the pair of protrusions at the distal end of first exposed part 61a.

### (Modified examples)

While electric motor 1 according to the present disclosure has been described above based on the exemplary embodiment, the present disclosure is not limited to the above-described exemplary embodiment.

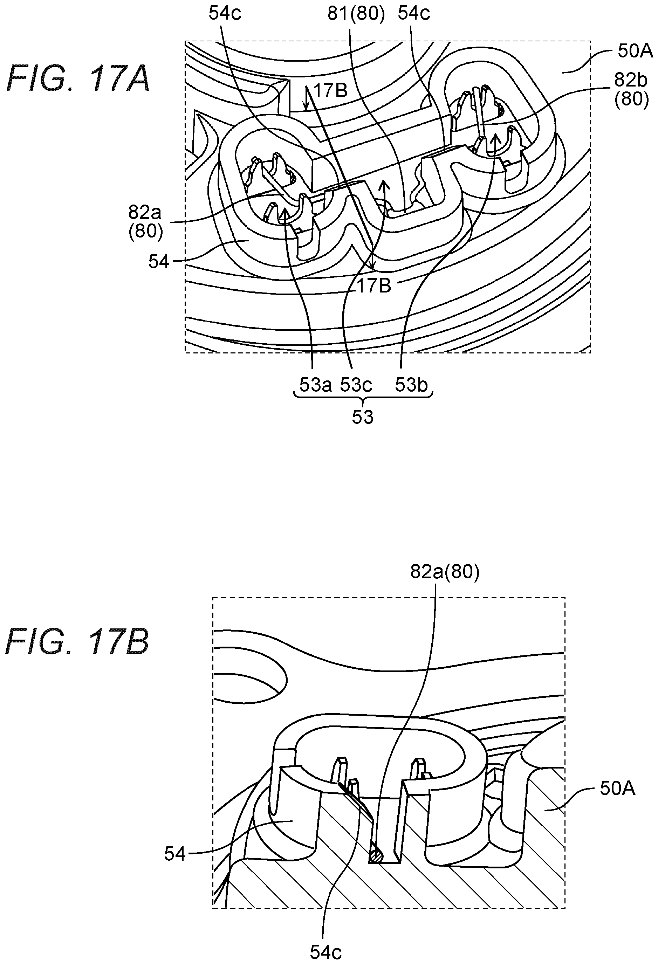

Fig. 17A is an enlarged perspective view illustrating a configuration of recess 53 in electric motor 1 according to a modified example. Fig. 17B is a cross-sectional view of a main part corresponding to a cross section taken along line 17B-17B in Fig. 17A. For example, as in brush holder 50A illustrated in Figs. 17A and 17B, tapered part 54c in which a part of an inner wall surface of wall 54 is a tapered surface may be formed in a part of wall 54 constituting recess 53. In Figs. 17A and 17B, tapered part 54c is formed in wall 54 constituting third recess 53c. In this case, tapered part 54c may be formed at a location facing a part where first lead 82a and second lead 82b of capacitor 80 are bent outward from body 81 (a part extending along a longitudinal direction of the bridge of third recess 53c). As a result, when capacitor 80 is disposed in recess 53, since the positions of first lead 82a and second lead 82b are easily determined, capacitor 80 can be easily housed in recess 53.

In the above-described exemplary embodiment, the planar view shape of recess 53 formed in brush holder 50 is a shape in which a protruding part protruding outward from the bridge is formed based on the H-shape formed by first recess 53a, second recess 53b, and the bridge of third recess 53c, but the present disclosure is not limited thereto.

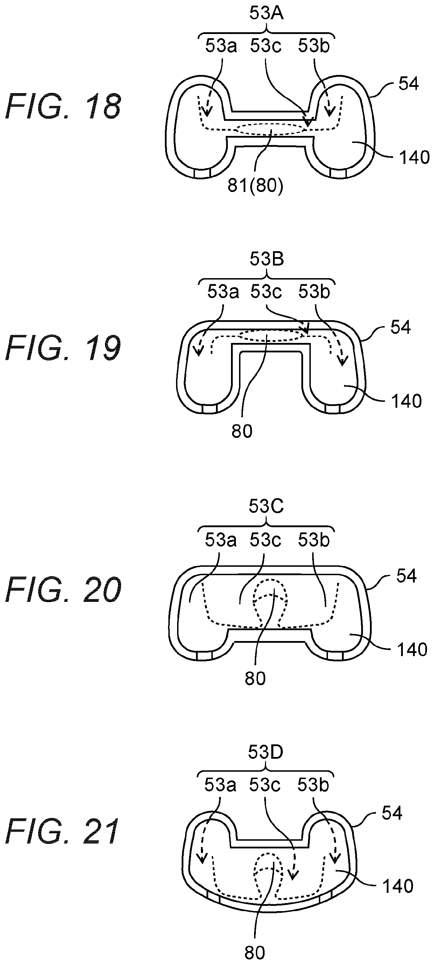

For example, as in recess 53A illustrated in Fig. 18, third recess 53c may include only the bridge, and the planar view shape of recess 53A including first recess 53a, second recess 53b, and third recess 53c may be an H-shape. Fig. 18 is a plan view illustrating a first modified example of recess 53A in brush holder 50A. Fig. 19 is a plan view illustrating a second modified example of recess 53B in brush holder 50A. Alternatively, as in recess 53B illustrated in Fig. 19, this recess may have a shape in which the bridge of third recess 53c is shifted to one ends of first recess 53a and second recess 53b based on H-shaped recess 53A illustrated in Fig. 18. That is, as illustrated in Fig. 19, a planar view shape of recess 53B may be a U-shape.

In this case, body 81 of capacitor 80 housed in third recess 53c may not be disposed in third recess 53c in a flat manner as in the above-described exemplary embodiment, but may be disposed in third recess 53c in a vertical manner as illustrated in Figs. 18 and 19. That is, body 81 of capacitor 80 may be disposed in third recess 53c in a posture standing on the outer surface of brush holder 50. Note that, in the above-described exemplary embodiment and other modified examples, body 81 of capacitor 80 may be disposed in third recess 53c not in the flat manner but in the vertical manner.

As described above, a planar view shape of recess 53A is the H-shape or the U-shape, and thus, a volume of sealant 140 to be filled can be reduced as compared with recess 53 in the above-described exemplary embodiment. In addition, the planar view shapes of recess 53A and recess 53B including recess 53 in the above-described exemplary embodiment are shapes based on the H-shape, sealant 140 can be stably filled. That is, since the liquid insulating resin material can be easily applied to the entire recess 53 by forming third recess 53c having the bridge between first recess 53a and second recess 53b, sealant 140 can be stably filled.

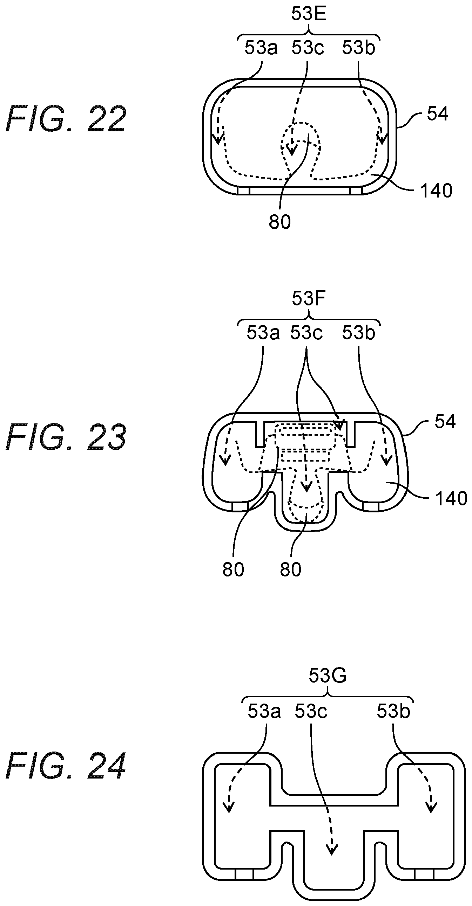

Fig. 20 is a plan view illustrating a third modified example of recess 53 in brush holder 50. Fig. 21 is a plan view illustrating a fourth modified example of recess 53 in brush holder 50. As in recess 53C illustrated in Fig. 20, a planar view shape of recess 53C may be a shape in which the entire width of the bridge of third recess 53c is widened to one ends of first recess 53a and second recess 53b. Alternatively, as in recess 53D illustrated in Fig. 21, a part or the entire width of the bridge of third recess 53c may be widened beyond one ends of first recess 53a and second recess 53b. The planar view shape of recess 53D illustrated in Fig. 21 is a shape in which one end of the width of the bridge of third recess 53c is curved to bulge outward. For example, the planar view shape of recess 53 illustrated in Fig. 21 is a frog shape. Fig. 22 is a plan view illustrating a fifth modified example of recess 53 in the brush holder. As in recess 53E illustrated in Fig. 22, the entire width of the bridge of third recess 53c may be widened to both ends of first recess 53a and second recess 53b. A planar view shape of recess 53E illustrated in Fig. 22 is a rectangular shape with rounded four corners. That is, a three-dimensional shape of recess 53E illustrated in Fig. 22 is a substantially rectangular box shape.

As described above, since body 81 of capacitor 80 can be disposed in third recess 53c in the flat manner by increasing the width of the bridge of third recess 53c, entire capacitor 80 can be easily covered with sealant 140 without increasing a height of wall 54. In addition, since a volume of third recess 53c increases, capacitor 80 having a large size of body 81 can be easily housed.

Fig. 23 is a plan view illustrating a sixth modified example of recess 53 in the brush holder. As in recess 53F illustrated in Fig. 23, third recess 53c having a size capable of housing a plurality of capacitors 80 may be provided. A planar view shape of recess 53F illustrated in Fig. 23 is a shape in which the width of the bridge of third recess 53c is widened in recess 53 in the above-described exemplary embodiment.

As described above, the size of third recess 53c is set to the shape capable of housing the plurality of capacitors 80, and thus, it is possible to select one or a plurality of capacitors 80 in accordance with the capacitance required for the noise to be reduced and house the selected capacitor in third recess 53c. That is, the plurality of capacitors 80 may be housed in third recess 53c, or one capacitor 80 having body 81 having a large size of body 81 may be housed. Note that, in a case where the plurality of capacitors 80 are housed in third recess 53c, all of the plurality of capacitors 80 are connected in parallel between the terminals of first terminal 61 and second terminal 62.

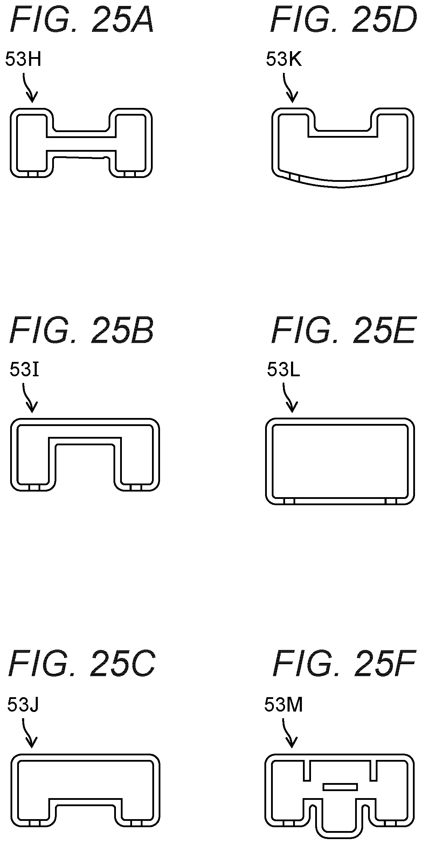

In addition, the planar view shape of recess 53 in the above-described exemplary embodiment is a shape with rounded corners, but the present disclosure is not limited thereto. Fig. 24 is a plan view illustrating a seventh modified example of recess 53 in the brush holder. For example, as in recess 53G illustrated in Fig. 24, in recess 53 in the above-described exemplary embodiment, each corner of first recess 53a, second recess 53b, and third recess 53c may have an angular shape. Figs. 25A to 25F are plan views illustrating an eighth modified example to a thirteenth modified example of recess 53 in the brush holder, respectively. Similarly, as in recesses 53H, 53I, 53J, 53K, 53L, and 53M illustrated in Figs. 25A to 25F, in recesses 53A, 53B, 53C, 53D, 53E, and 53F illustrated in Figs. 18 to 23, each corner of first recess 53a, second recess 53b, and third recess 53c may have an angular shape.

In addition, in the above-described exemplary embodiment, although electric motor 1 is a coreless motor in which stator 10 and rotor 20 do not have a core, the present disclosure is not limited thereto. For example, electric motor 1 may be an electric motor in which stator 10 and rotor 20 have a core.

In addition, in the above-described exemplary embodiment, although stator 10 includes only the permanent magnet, the present disclosure is not limited thereto. For example, stator 10 may be a stator including a permanent magnet and an iron core, or may be a stator including a stator winding and an iron core without using the permanent magnet.

In addition, in the above-described exemplary embodiment, although electric motor 1 is a flat motor having an outer size in which a thickness is smaller than an outer diameter, the present disclosure is not limited thereto. The technology of the present disclosure can also be applied to, for example, a cylindrical electric motor having a cylindrical housing having a thickness larger than an outer diameter.

In addition, in the above-described exemplary embodiment, the direction of the main magnetic flux generated by stator 10 and rotor 20 is the direction of shaft center C of rotating shaft 21. However, the present disclosure is not limited to this. Specifically, the direction of the main magnetic flux generated by stator 10 and rotor 20 may be a direction orthogonal to the direction of shaft center C of rotating shaft 21 (radial direction of rotation of rotating shaft 21). For example, the technology of the present disclosure can also be applied to an inner rotor type motor in which rotor 20 is disposed inside stator 10.

In addition, in the above-described exemplary embodiment, electric motor 1 is a vehicle motor used in a vehicle. However, the present disclosure is not limited to the exemplary embodiment. The technology of the present disclosure can also be applied to, for example, an electric motor used for various other electric devices such as an electric motor used for an electric blower or the like mounted on a vacuum cleaner or the like.

In addition, the present disclosure includes other embodiments obtained by making various modifications conceived by the person of ordinary skill in the art to the above exemplary embodiment, or other embodiments achieved by any combination of the configuration elements and functions in each exemplary embodiment without departing from the spirit of the present disclosure.

### INDUSTRIAL APPLICABILITY

The technology of the present disclosure can be widely used in various products on which an electric motor is mounted, including products in an electric field such as automobiles and a home electric equipment field.

### REFERENCE MARKS IN THE DRAWINGS

1: electric motor
10: stator
11: magnet
20: rotor
21: rotating shaft
21a: first end
21b: second end
22: armature winding
23, 32: molded resin
30: commutator
31: commutator segment
41: first brush
42: second brush
50, 50A: brush holder
51: first brush housing
52: second brush housing
53, 53A, 53B, 53C, 53D, 53E, 53F, 53G, 53H, 53I, 53J, 53K, 53M: recess
53a: first recess
53b: second recess
53c: third recess
54: wall
54a: first hollow
54b: second hollow
54c: tapered part
61, 61A: first terminal
61a: first exposed part
61b, 62b: bottom plate
61c: hollow
62: second terminal
62a: second exposed part
71: first electric wire
71a, 72a: first part
71b, 72b: second part
72: second electric wire
80: capacitor
81: body
82a: first lead
82b: second lead
91: first bearing
92: second bearing
101: first bracket
102: second bracket
111: first brush spring
112: second brush spring
121: first pigtail line
122: second pigtail line
131: first cover plate
132: second cover plate
140: sealant

## Claims

1. An electric motor comprising:
a commutator;
a first brush and a second brush that are in contact with the commutator;
a brush holder that holds the first brush and the second brush;
a first terminal that has a first exposed part exposed from an outer surface side of the brush holder, and is electrically connected to the first brush;
a second terminal that has a second exposed part exposed from the outer surface side of the brush holder, and is electrically connected to the second brush;
a first electric wire that is joined to the first exposed part of the first terminal;
a second electric wire that is joined to the second exposed part of the second terminal; and
a capacitor that has a first lead joined to the first exposed part of the first terminal and a second lead joined to the second exposed part of the second terminal, wherein
the brush holder has a recess formed in the outer surface side of the brush holder,
the recess includes a first recess where the first exposed part of the first terminal is positioned, a second recess where the second exposed part of the second terminal is positioned, and a third recess that is positioned between the first recess and the second recess and is integrally formed with the first recess and the second recess, and
a body of the capacitor is housed in the third recess.

2. The electric motor according to Claim 1, wherein the brush holder constitutes an outer frame of the electric motor.

3. The electric motor according to Claim 1 or 2, wherein the third recess has a bridge formed in a bridge shape.

4. The electric motor according to any one of Claims 1 to 3, wherein the first electric wire and the first lead are joined to the first exposed part by being caulked to a part of the first exposed part, and the second electric wire and the second lead are joined to the second exposed part by being caulked to a part of the second exposed part.

5. The electric motor according to Claim 4, wherein
the first terminal has a pair of the first exposed parts,
the second terminal has a pair of the second exposed parts,
each of the first electric wire and the second electric wire has a core wire made of a conductor, and an insulating film coating the core wire,
a first part where the core wire is exposed on a distal end side of the first electric wire and the first lead are caulked to one of the pair of first exposed parts,
a second part where the core wire is not exposed in the first electric wire is caulked to another of the pair of first exposed parts,
a first part where the core wire is exposed on a distal end side of the second electric wire and the second lead are caulked to one of the pair of second exposed parts, and
a second part where the core wire is not exposed in the second electric wire is caulked to another of the pair of second exposed parts.

6. The electric motor according to Claim 5, wherein
the first lead and the first part of the first electric wire are disposed in a recess of the first exposed part of one of the pair of first exposed parts in order in a vertical direction, and
the second lead and the first part of the second electric wire are disposed in a recess of the second exposed part of one of the pair of second exposed parts in order in the vertical direction.

7. The electric motor according to any one of Claims 1 to 6, wherein
the first lead and the first electric wire are joined to the first exposed part by solder, and
the second lead and the second electric wire are joined to the second exposed part by solder.

8. The electric motor according to any one of Claims 1 to 7, wherein the first recess, the second recess, and the third recess are filled with a sealant.

9. The electric motor according to any one of Claims 1 to 8, wherein
the electric motor is a flat type, and
an outer diameter of the electric motor is less than or equal to 120 mm.
